# EUROPÄISCHE PATENTSCHRIFT

(11) **EP 1 530 667 B1**
(45) Veröffentlichungstag und Bekanntmachung des Hinweises auf die Patenterteilung: **13.01.2016**
(21) Anmeldenummer: 03790665.8
(22) Anmeldetag: 23.07.2003
(51) Int. Cl.: E06B 9/00

(54) **VERSCHLUSSEINRICHTUNG FÜR FENSTER, TÜREN OD.DGL. ÖFFNUNGEN**
CLOSING DEVICE FOR WINDOWS, DOORS OR SUCH OPENINGS
DISPOSITIF DE FERMETURE POUR FENETRES, PORTES OU OUVERTURES SIMILAIRES

(30) Priorität: 22.08.2002 DE 10239485
(43) Veröffentlichungstag der Anmeldung: 18.05.2005
(73) Patentinhaber: Knauer, Dieter, 73240 Wendlingen (DE)
(72) Erfinder: Knauer, Dieter, 73240 Wendlingen (DE)
(74) Vertreter: Witte, Weller & Partner Patentanwälte mbB
(86) Internationale Anmeldenummer: PCT/DE2003/002573
(87) Internationale Veröffentlichungsnummer: WO 2004/020773

(56) Entgegenhaltungen:
- DE-A- 19 826 420
- US-A- 5 662 153

## Beschreibung

Die Erfindung bezieht sich auf eine Verschlusseinrichtung für Fenster, Türen od.dgl. Öffnungen mit den Merkmalen im Oberbegriff des Patentanspruchs 1.

Es ist eine Verschlusseinrichtung dieser Art bekannt (DE 198 26 420.8 A1), bei der das Abdeckelement aus einem plissierten Behang aus Stoff oder Kunststoff und hierbei aus einem Material gebildet ist, das eine ausreichende Biegesteifigkeit haben soll und im aufgefächerten Zustand einen im wesentlichen biege- und knicksteifen Fächerbehang bilden soll. Dieser Behang ist im Bereich der jeweiligen Knicke, über die die Elementteile einstückig verbunden sind, leichtgängig beweglich und knickbar, so dass beim etwa fächerartigen Öffnen und Auffächern in die Abdeckstellung eine leichtgängige Öffnung des Abdeckelements im Bereich der Falten möglich ist und geschieht und beim gegensinnigen Zufächern und Überführen in die Freigabestellung ebenfalls ein leichtgängiges Zusammenfalten im Bereich der Falten erfolgt. Dies ist bei dieser bekannten Verschlusseinrichtung deswegen bedeutsam, weil das Auffächern und Zufächern jeweils mittels einer besonderen Antriebseinrichtung erfolgt. Dies ist dadurch möglich, dass bei diesem plissierten Behang die Elementteile etwa ziehharmonikaartig miteinander gelenkig verbunden sind und in diesen Gelenken im wesentlichen widerstandsfrei beweglich, das heißt aufklappbar bzw. zuklappbar, sind.

Der Erfindung liegt die Aufgabe zugrunde, eine Verschlusseinrichtung der eingangs genannten Art so zu gestalten, dass diese möglichst einfach, kostengünstig und leicht ist und sich in einfacher Weise für einen nachträglichen Einbau eignet.

Die Aufgabe ist bei einer Verschlusseinrichtung der eingangs genannten Art gemäß der Erfindung durch die Merkmale im Anspruch 1 gelöst. Dadurch ist es möglich, durch einfache Ausnutzung eines z.B. im Stapelzustand erzeugten federnden Rückstellvermögens des Abdeckelements dieses sich selbsttätig auffächem zu lassen und die aufgefächerte Verschlussstellung herbeizuführen. Zur gegensinnigen Bewegung z.B. in die Freigabestellung ist es dabei lediglich erforderlich, das Abdeckelement unter äußerer Krafteinwirkung zum Stapel zuzufächern. In besonders einfacher Weise besteht hierbei das Abdeckelement aus einem dauerhaft plissierten Element, z.B. einer Kunststofffolie, die sehr dünn und damit kostengünstig, leicht und platzsparend sein kann. Die Kunststofffolie hat zumindest auf einer Seite ein hohes Reflexionsvermögen, zum Beispiel durch metallische Beschichtung, z.B. mit Aluminium, Silber, Gold od.dgl. Hierbei sind die einzelnen Elementteile und federnden Knicke des Abdeckelements einstückige Bestandteile des Elements, insbesondere der Kunststofffolie.

Vorteilhafte weitere Erfindungsmerkmale und Ausgestaltungen ergeben sich aus den Unteransprüchen 2 bis 40.

Besonders vorteilhaft ist eine Ausgestaltung gemäß Anspruch 41. Die Deckeinrichtung hat den Vorteil, dass diese beim Schließen der Längsverschlusseinrichtung mittels letzterer auf jeweilige, zu einem Stapel zuzufächernde Bereiche des Abdeckelements zumindest von einer Seite und zusätzlich im wesentlichen von oben bewegbar ist, wobei die Deckeinrichtung beim Schließen der Längsverschlusseinrichtung fortschreitend diese Bereiche zumindest teilweise überdeckt, und dies vorzugsweise mit Abstand von dem beweglichen Teil der Längsverschlusseinrichtung. Beim gegensinnigen Öffnen der Längsverschlusseinrichtung wird die Deckeinrichtung von der Längsverschlusseinrichtung fortschreitend freigegeben mit entsprechender fortschreitender Freigabe des Stapels, so dass das Abdeckelement sich zunehmend auffächern kann. Dabei verläuft die Deckeinrichtung jeweils unterhalb der Längsverschlusseinrichtung und schützt das Abdeckelement vor der Längsverschlusseinrichtung, insbesondere vor dessen beweglichen Teil, aber auch vor etwaigen Unterbrechungen, die entlang dem Längsverlauf der Längsverschlusseinrichtung vorgesehen sind und mit dem beweglichen Teil zusammenarbeiten, z. B. bei Gestaltung der Längsverschlusseinrichtung als Reißverschluss vor den Zähnen des letzteren. Beim Öffnen der Längsverschlusseinrichtung ist somit gewährleistet, dass deren beweglicher Teil bzw. dessen Zähne nicht in Kontakt mit den Elementteilen, insbesondere den Enden der zusammengefalteten Elementteile, gelangen und sich dort sonst eventuell, unter Beschädigung letzterer, verhaken könnten. Die Deckeinrichtung ist einfach und kostengünstig und gewährleistet ein störungsfreies Öffnen und Schließen der Längsverschlusseinrichtung zugleich ohne die Gefahr einer etwaigen Beschädigung des Abdeckelements. Weitere vorteilhafte Erfindungsmerkmale und Ausgestaltungen hierzu ergeben sich aus den darauf folgenden Unteransprüchen.

Weitere Einzelheiten und Vorteile der Erfindung ergeben sich aus der nachfolgenden Beschreibung.

Der vollständige Wortlaut der Patentansprüche ist vorstehend allein zur Vermeidung unnötiger Wiederholungen nicht wiedergegeben, sondern statt dessen lediglich durch Verweisung auf die Ansprüche darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus den Zeichnungen entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: eine schematische Seitenansicht einer Verschlusseinrichtung für Fenster, Türen od. dgl. Öffnungen gemäß einem ersten Ausführungsbeispiel in einer Abdeckstellung mit im wesentlichen vollständiger Abdeckung einer Öffnung,
- Fig. 2: eine schematische, teilweise geschnittene Seitenansicht der Verschlusseinrichtung in Fig. 1 in einem Zwischenstadium, bei dem ein Teil des Abdeckelements zu einem Stapel zugefächert und der andere Teil aufgefächert ist,
- Fig. 3: eine schematische, teilweise geschnittene Draufsicht der Verschlusseinrichtung in Fig. 2,
- Fig. 4: eine schematische, teilweise geschnittene Stirnansicht der Verschlusseinrichtung in Pfeilrichtung IV in Fig. 2,
- Fig. 5: eine schematische, teilweise geschnittene Stirnansicht entsprechend derjenigen in Fig. 4, wobei die Verschlusseinrichtung jedoch zu einem Stapel gänzlich zugefächert ist,
- Fig. 6: eine schematische Seitenansicht etwa entsprechend derjenigen in Fig. 2 einer Verschlusseinrichtung gemäß einem zweiten Ausführungsbeispiel, wobei sich die Verschlusseinrichtung in der Abdeckstellung befindet,
- Fig. 7: eine schematische, teilweise geschnittene Seitenansicht einer Verschlusseinrichtung gemäß einem dritten Ausführungsbeispiel, wobei sich die Verschlußeinrichtung in der Abdeckstellung befindet,
- Fig. 8: einen schematischen Schnitt entlang der Linie VIII - VIII in Fig. 7,
- Fig. 9: eine schematische, teilweise geschnittene Seitenansicht einer Verschlusseinrichtung gemäß einem vierten Ausführungsbeispiel, wobei sich die Verschlusseinrichtung in der Abdeckstellung befindet.
- Fig. 10 - 12: jeweils eine schematische Seitenansicht einzelner Elementteile in verschiedenen Zuständen, und zwar in Fig. 10 in einer nicht Energiespeicherstellung, in Fig. 11 in einer über das selbsttätige Auffächern hinausgehenden kraftbetätigten Auffächerstellung und in Fig. 12 in einer zugefächerten Energiespeicherstellung,
- Fig. 13: eine schematische Seitenansicht ähnlich derjenigen in Fig. 1 einer Verschlusseinrichtung gemäß einem fünften Ausführungsbeispiel in einer Abdeckstellung,
- Fig. 14: eine schematische, teilweise geschnittene Seitenansicht ähnlich derjenigen in Fig. 2 der Verschlusseinrichtung in Fig. 13,
- Fig. 15: eine schematische, teilweise geschnittene Draufsicht der Verschlusseinrichtung in Pfeilrichtung XV in Fig. 14,
- Fig. 16: einen schematischen Schnitt entlang der Linie XVI-XVI in Fig. 15 mit teilweiser Stirnansicht,
- Fig. 17: eine schematische, teilweise geschnittene Seitenansicht der Verschlusseinrichtung in Fig. 1 in einem Zwischenstadium beim Auffächern bzw. Zufächern,
- Fig. 18: eine schematische Draufsicht der Verschlusseinrichtung in Pfeilrichtung XVIII in Fig. 17,
- Fig. 19: eine schematische, teilweise geschnittene Stirnansicht der Verschlusseinrichung in Pfeilrichtung IX in Fig. 17,
- Fig. 20: eine schematische Seitenansicht der Verschlusseinrichtung etwa entsprechend derjenigen in Fig. 14, wobei sich die Verschlusseinrichtung in der Abdeckstellung befindet,
- Fig. 21: eine schematische, teilweise geschnittene Draufsicht der Verschlusseinrichtung in Fig. 20,
- Fig. 22: eine schematische Seitenansicht der Verschlusseinrichtung in der zugefächerten Freigabestellung mit modifizierter Längsverschlusseinrichtung,
- Fig. 23: einen schematischen Schnitt entlang der Linie XXIII - XXIII in Fig. 22,
- Fig. 24: eine schematische Seitenansicht etwa entsprechend derjenigen in Fig. 20 einer Verschlusseinrichtung gemäß einem sechsten Ausführungsbeispiel, wobei sich die Verschlusseinrichtung in der Abdeckstellung befindet.

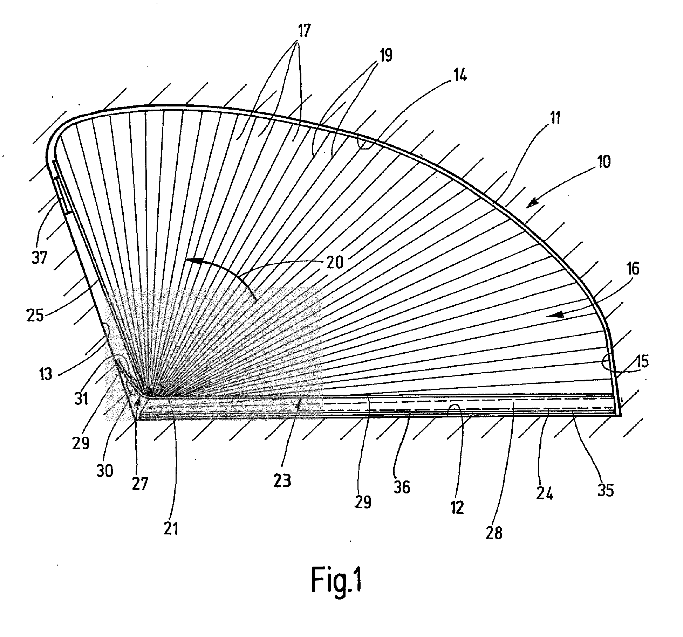

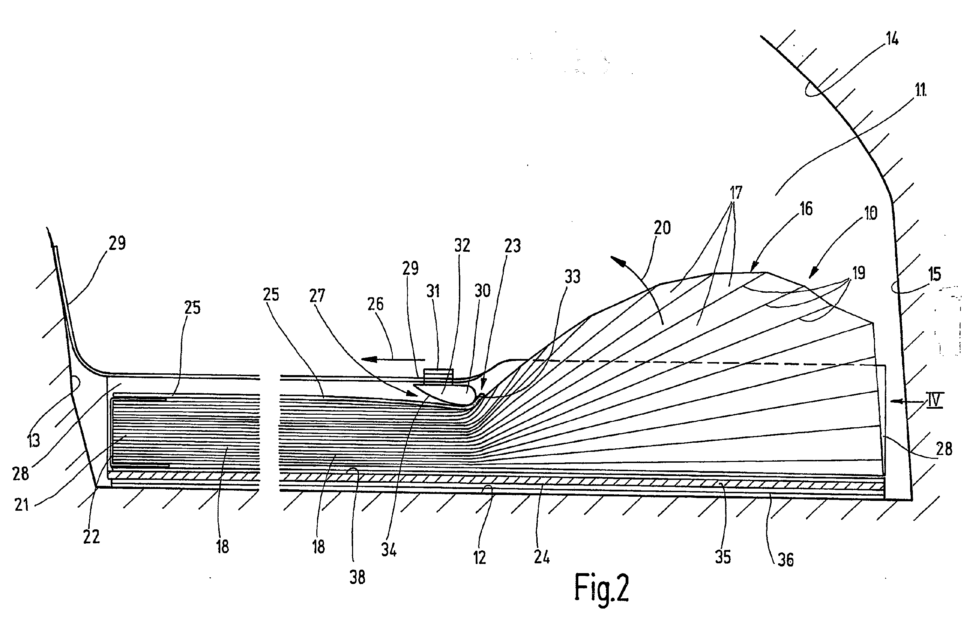

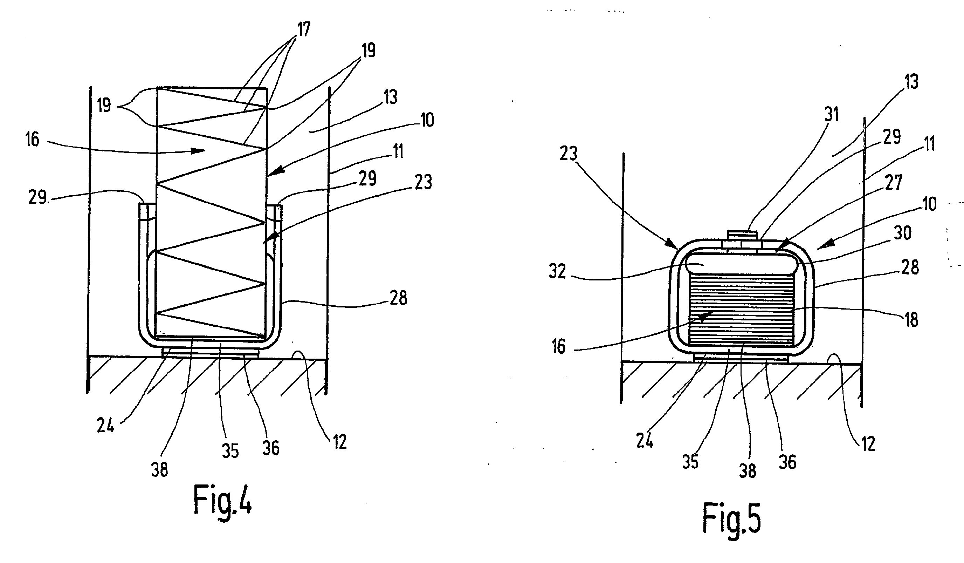

In Fig. 1 bis 5 ist eine Verschlusseinrichtung 10 gemäß einem ersten Ausführungsbeispiel für Fenster, Türen od. dgl. Öffnungen 11 gezeigt, die sich in Fig. 1 in ihrer Abdeckstellung befindet, in der die Öffnung 11 ganz oder auch nur teilweise abgedeckt ist, und die sich bei der Darstellung in Fig. 5 in ihrer nicht wirksamen Freigabestellung befindet, in der die Öffnung 11 im wesentlichen gänzlich freigegeben ist. Die Verschlusseinrichtung 10 befindet sich bei den Darstellungen in Fig. 2 bis 4 in einem Zwischenstadium zwischen dem Abdecken bzw. Freigeben der Öffnung 11. Bei der Öffnung 11 handelt es sich um eine beliebige Öffnung, z.B. eine Fensteröffnung oder Türöffnung, und hierbei z.B. eine solche eines Gebäudes oder eines Fahrzeuges, z.B. eines Fahrzeugfensters, das aus einem vorderen oder hinteren oder seitlichen Fenster des Fahrzeuges bestehen kann. Die Öffnung 11 kann z.B. diejenige eines seitlichen Fensters eines Fahrzeugs, insbesondere eines Kraftfahrzeugs, sein, die z.B. mittels einer im wesentlichen in vertikaler Richtung auf- und abfahrbaren Scheibe verschließbar ist. Die Öffnung 11 wird unten durch einen unteren Rand 12, links durch einen seitlichen Rand 13, oben durch einen oberen bogenförmig verlaufenden Rand 14 und rechts davon durch einen rechten Rand 15 begrenzt, wobei alle Ränder 12 bis 15 oder einige dieser von einem hier nicht weiter dargestellten Rahmenteil gebildet sein können.

Die Verschlusseinrichtung 10 weist ein Abdeckelement 16 auf, das zickzackförmig verbundene, bewegliche, auf- und zufächerbare Elementteile 17 aufweist, die im in Fig. 1 dargestellten aufgefächerten Zustand, der der Abdeckstellung entspricht, einen etwa flächigen Verschluss der Öffnung 11 bilden und die im in Fig. 5 gezeigten zugefächerten Zustand einen Stapel 18 bilden, in dem die einzelnen Elementteile 17 zueinander etwa parallel verlaufend übereinander gestapelt sind, wie in Fig. 2 für einen Teilbereich des Abdeckelements 16 auch gezeigt ist. Die Elementteile 17 haben jeweils alle die gleiche Breite.

Das Abdeckelement 16 ist hinsichtlich seiner möglichen Auffächerung (Fig. 1) und hinsichtlich seiner Randkontur, die sich im aufgefächerten Zustand der Elementteile 17 ergibt (Fig. 1), an den jeweiligen Randverlauf der jeweiligen Öffnung, in Fig. 1 an den Randverlauf 12 bis 15 der gezeigten Öffnung 11, derart angepasst, dass diese Öffnung 11 in der Abdeckstellung (Fig. 1) im wesentlichen ganz abgedeckt ist.

Beim gezeigten Ausführungsbeispiel ist das mindestens eine Abdeckelement 16 aus einem dünnwandigen Element, z.B. einem Kunststoffteil, insbesondere einer Kunststofffolie, gebildet, die ein einstückiges Ganzes darstellt. Dieses Element, insbesondere diese Kunststofffolie, ist zur Bildung der einzelnen Elementteile 17 dauerhaft plissiert. Die einzelnen Elementteile 17 sind dadurch etwa ziehharmonikaartig oder zickzackförmig gefaltet unter Bildung jeweiliger in Längsrichtung ihrer Längsränder sich erstreckender Knicke 19, die in der Nichtenergiespeicherstellung im Querschnitt etwa V-förmig sind, wobei sich der Öffnungswinkel des V beim Auf- und Zufächern des Abdeckelements 16 verändert, nämlich vergrößert bzw. bei der Bildung des zugefächerten Stapels 16 nahezu zu Null wird. Auch variiert der Öffnungswinkel des V in Längsrichtung eines Knickes 19 betrachtet, ausgehend von einem den einzelnen Elementteilen 17 im wesentlichen gemeinsamen Bereich 21. Im aufgefächerten Zustand des Abdeckelements 16 gemäß Fig. 1 ist der V-Winkel nahe des gemeinsamen Bereiches 21 klein, wobei der V-Winkel ausgehend von diesem Bereich 21 in Längsrichtung zweier benachbarter Elementteile 17 etwa stufenlos größer wird. Der Kunststoffteil, insbesondere die Kunststofffolie, aus der das Abdeckelement 16 durch Plissieren gebildet ist, weist zumindest auf einer Seite ein hohes Reflexionsvermögen auf, wozu diese Kunststofffolie z.B. auf dieser Seite beschichtet ist, z.B. mit Aluminium, Gold od. dgl. Dabei kann diese Kunststofffolie gleichwohl zumindest in einer Richtung von der nicht beschichteten zur beschichteten Seite hin durchsichtig sein. Die Kunststofffolie kann relativ dünn sein. Eine dünne Kunststofffolie hat den Vorteil, dass sich im völlig zugefächerten Zustand (Fig. 5) eine sehr niedrige Höhe für den Stapel 18 ergibt und damit das Verschlusselement 10 in diesem Zustand einen sehr geringen Platzbedarf hat. Außerdem führt die Dünnwandigkeit des Kunststoffteils, insbesondere der Kunststofffolie, zu einem geringen Gewicht und zu einer erleichterten Handhabung. Durch die dauerhafte Plissierung des Abdeckelements 16 ist erreicht, dass die Elementteile 17 zumindest im aufgefächerten Zustand (Fig. 1) im Bereich der Knicke 19 zumindest im wesentlichen biegesteif sind. Das plissierte Abdeckelement 16 stellt sich ähnlich einem Fächer dar, wobei dieses im aufgefächerten Zustand ein quer zur Ebene, in der die Auffächerung erfolgt, im wesentlichen steifes Gebilde darstellt. Das Abdeckelement 16 ist an die besondere Form der Öffnung 11 in der Weise angepasst, dass das Abdeckelement 16 zur Herbeiführung der Abdeckstellung (Fig. 1) so weit auffächerbar ist, dass die Öffnung 11 im wesentlichen abgedeckt ist, wobei das Abdeckelement 16 auch ohne zusätzliche Stabilisierungselemente ein biegesteifes Flächengebilde darstellt. Die Randkontur des Abdeckelements 16 ist in entsprechender Weise gewählt.

Bei dem Abdeckelement 16 ist die Anordnung derart gewählt, dass die Elementteile 17 des Abdeckelements 16 entlang ihren Längsrändern bzw. Knicken 19 bei Freigabe des zugefächerten Stapels 18, wie dies teilweise z.B. in Fig. 2 zu sehen ist, sich selbsttätig in Pfeilrichtung 20 und somit in Abdeckrichtung auffächern und durch gegensinnige äußere Krafteinwirkung zum Stapel 18 zufächerbar sind. Die einzelnen Elementteile 17 sind in Auffächerrichtung gemäß Pfeil 20 jeweils federnd, wobei sie in Zufächerrichtung gegensinnig zum Pfeil 20 gegen die Federung unter Aufladung dieser zufächerbar sind. Die Knicke 19 der Elementteile 17 sind selbstfedernd, derart, dass die Elementteile 17 im zum Stapel 18 zugefächerten Zustand im Bereich der Knicke 19 federnd aufgeladen sind, also unter Spannung stehen, und bei Freigabe unter der Wirkung des federnden Rückstellvermögens selbsttätig in Pfeilrichtung 20 auffächerbar sind. Zum Auffächern des Abdeckelements 16 in Pfeilrichtung 20 wird also allein das im Stapel 18 gespeicherte federnde Rückstellvermögen genutzt, das durch Freigabe des Stapels 18 zum Auffächern in Pfeilrichtung 20 aktiviert wird.

Wie aus Fig. 2 ersichtlich ist, sind die Elementteile 17 im gemeinsamen Bereich 21 zusammengehalten und in Abstand davon in Richtung ihrer Längsränder unter Ausfedern auffächerbar bzw. gegensinnig zufächerbar. Die Zusammenhaltung im gemeinsamen Bereich 21 geschieht mittels eines Zusammenhalteteils 22, das vielfältig gestaltet sein kann, z.B. als etwa U-förmige Klammer aus Metall, Kunststoff, insbesondere Folie od. dgl. Auch kann das Zusammenhalteteil 22 aus einem Klebeband, einer Klebefolie oder ähnlichem gebildet sein. Auch können die Elementteile 17 in diesem gemeinsamen Bereich 21 auf z.B. relativ kurzer Länge durch Kleben verbunden und zusammengehalten sein.

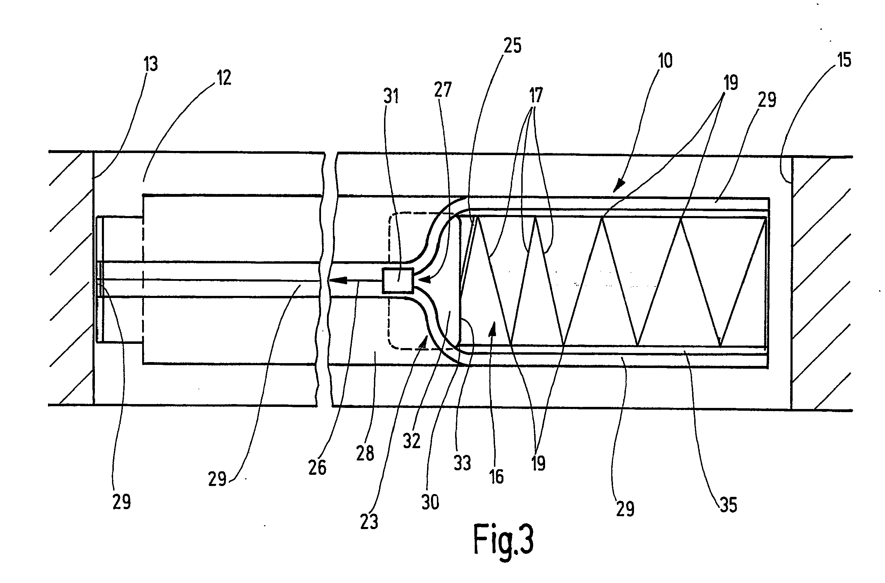

Im zugefächerten Zustand (Fig. 5) wird der Stapel 18 mit den Elementteilen 17 gegen die Wirkung der in Auffächerrichtung wirksamen Federkraft mittels eines Zuhaltemittels 23 zugehalten, das die im Stapel 18 gespeicherte Federspannung aufnimmt und zum Freigeben des Stapels 18 in Auffächerrichtung in einer Richtung gemäß Pfeil 26 in eine Freigabestellung und zum Zufächern zum Stapel 18 gegensinnig zum Pfeil 26 in eine Schließstellung (Fig. 5) bewegbar ist. Das Zuhaltemittel 23 weist eine am Stapel 18 angreifende, in Längsrichtung der einzelnen Elementteile 17 bewegbare Niederhaltevorrichtung 27 auf. Das Zuhaltemittel 23 umgibt den Stapel 18 an einer Stelle oder an mehreren Stellen oder, wie beim ersten Ausführungsbeispiel verwirklicht ist, entlang dessen Längsrichtung und hält den Stapel 18 auf dieser jeweiligen Längsrichtung zusammen, wobei die bewegbare Niederhaltevorrichtung 27 z.B. von oben her auf den Stapel 18 einwirkt. Das Zuhaltemittel 23 weist ein Aufnahmeelement 28 auf, das an einem Rahmenteil der Öffnung 11, z.B. am in Fig. 1 unteren Rand 12, halterbar ist. Das Aufnahmeelement 28 ist so gestaltet, dass dieses den Stapel 18, soweit dieser bereits zugefächert ist, d.h. also je nach Stadium auf einem Teil seiner Länge (Fig. 2) oder auf der gesamten Länge (Fig. 5), aufnimmt und in diesem zusammengepressten Stapelzustand zusammenhält. Dieses Aufnahmeelement 28 weist zumindest eine Längsverschlusseinrichtung 29, z.B. einen Reißverschluss, einen Längsbandverschluss od. dgl., auf, mittels der das Aufnahmeelement 28 stufenlos auf der gesamten Länge (Fig. 5) oder nur auf einem Längenteil (Fig. 3) in einen Schließzustand bzw. in einen Öffnungszustand bringbar ist, wobei im Schließzustand der Stapel 18, soweit dieser zugefächert ist, zusammengehalten wird und im Öffnungszustand der Stapel 18 zur Auffächerung in Pfeilrichtung 20 freigegeben wird. Das Aufnahmeelement 28 ist als hohles Längsprofil ausgebildet. Es kann flexibel sein, z.B. aus elastischem Material gebildet sein. Das Aufnahmeelement 28 kann dabei schlauchförmig sein. Wenn das Aufnahmeelement 28 aus elastischem Material, z.B. gummiartig federndem Material, gebildet ist, ist das Aufnahmeelement 28 in der Lage, in seinem Schließzustand, in dem dieses den Stapel 18, soweit dieser zugefächert ist, zusammenhält, in der Weise zusammenzuhalten, dass die Elastizität des Materials des Aufnahmeelements 28 genutzt und dieses durch Dehnen unter Spannung gesetzt wird. Wird das Aufnahmeelement 28 dann in den Öffnungszustand überführt, um den Stapel 18 zur Auffächerung und Ausfederung freizugeben, bewirkt die das Zusammenhalten des Stapels unter Spannung bewirkende, nun freiwerdende Kraft ein noch stärkeres selbsttätiges Auffächern des Abdeckelements 16.

Wie insbesondere aus Fig. 3 und 5 ersichtlich ist, ist die mindestens eine Längsverschlusseinrichtung 29 auf der Oberseite des Aufnahmeelements 28 angeordnet, die dem Rand 12 abgewandt ist. Statt dessen kann die Längsverschlusseinrichtung 29 aber auch auf der in Fig. 5 links oder rechts befindlichen Seite des Aufnahmeelements 28 angeordnet sein. Im Rahmen der Erfindung liegt auch die Anordnung z.B. zweier Längsverschlusseinrichtungen 29, von denen eine auf der in Fig. 5 linken und die andere auf der in Fig. 5 rechten Seite oder links und rechts im oberen Eckbereich bzw. Bogenbereich des Aufnahmeelements 28 angeordnet ist. Die mindestens eine Längsverschlusseinrichtung 29 ist fester Bestandteil des Aufnahmeelements 28. Sie kann als separates Teil fest mit dem Aufnahmeelement 28 verbunden sein oder sie ist statt dessen einstückiger Bestandteil des Aufnahmeelements 28, das somit an dieser Stelle zugleich als Längsverschlusseinrichtung 29 ausgebildet ist. Wie insbesondere Fig. 1 und 2 erkennen lassen, reicht die mindestens eine Längsverschlusseinrichtung 29 über das in Fig. 1 und 2 links befindliche Ende des Aufnahmeelements 28, das dem gemeinsamen Bereich 21 der Elementteile 17 zugeordnet ist, hinaus. Dies hat den Vorteil, dass die Niederhaltevorrichtung 27 bedarfsweise über das genannte Ende des Aufnahmeelements 28 in Pfeilrichtung 26 hinausbewegt werden kann, um ein möglichst gänzliches Freigeben des gestapelten Abdeckelements 16 und Auffächern dieses in Pfeilrichtung 20 auch bis zum gemeinsamen Bereich 21 zu ermöglichen. Auch erleichtert und vereinfacht dies die Handhabung der Niederhaltevorrichtung 27.

Die Niederhaltevorrichtung 27 kann durch das Aufnahmeelement 28 oder zumindest einen Teil dieses gebildet sein. Beim gezeigten Ausführungsbeispiel weist die Niederhaltevorrichtung 27 ein Niederhalteelement 30 auf, das am beweglichen Teil 31 der Längsverschlusseinrichtung 29, z.B. des Reißverschlusses, angeordnet ist, mit diesem in Pfeilrichtung 26 und gegensinnig dazu bewegbar ist und das Abdeckelement 16 in seinem Wirkungsbereich zu einem Stapel 18 zusammendrückt bzw. zur Auffächerung freigibt. Der bewegliche Teil 31 der Längsverschlusseinrichtung 29 besteht bei Ausbildung des letzteren als Reißverschluss z.B. aus einem Schieber, der mittels einer daran beweglichen Lasche von Hand gefasst und in Pfeilrichtung 26 bzw. gegensinnig dazu längs der Längsverschlusseinrichtung 29 bewegbar ist. An diesem Schieber als beweglichen Teil 31 ist das Niederhalteelement 30 gehalten, und zwar auf der Seite, die der Oberseite des Stapels 18 zugewandt ist, das heißt in Fig. 2 und 5 auf der Unterseite dieses beweglichen Teils 31. Das Niederhalteelement 30 hat in Funktionsstellung Kontakt mit der Oberseite des Stapels 18, drückt auf diesen Stapel 18 und wird vom Stapel 18 aufgrund der durch die Stapelbildung erzeugten Rückstellkraft in Fig. 5 nach oben hin mit dieser Rückstellkraft beaufschlagt, die von der Längsverschlusseinrichtung 29 mitsamt dem Aufnahmeelement 28 aufgenommen wird. Bei einem nicht gezeigten Ausführungsbeispiel ist das Niederhalteelement durch den beweglichen Teil 31, z.B. Reißverschlussschieber, der Längsverschlusseinrichtung 29 selbst gebildet. Beim gezeigten Ausführungsbeispiel besteht das Niederhalteelement 30 aus einem Gleitkörper 32 und erstreckt sich in dieser Form z.B. über die Breite der einzelnen Elementteile 17. Mit Vorzug reicht das Niederhalteelement 30 in Form dieses Gleitkörpers 32 beidseitig über die Breite der Elementteile 17 hinaus, wie Fig. 5 erkennen lässt. Hierbei ist das Niederhalteelement 30 hinsichtlich der äußeren Randkontur etwa als Rechteckteil gebildet. Aufgrund dieses Quermaßes des Niederhalteelements 30, insbesondere Gleitkörpers 32, wirkt dieses auf der zugewandten Oberseite des Stapels 18 über dessen gesamte Breite. Dies hat unter anderem den Vorteil, dass im gesamten Stapel 18 die wirkenden Vertikalkräfte über die gesamte Stapelbreite wirksam sind, und dies auch auf der Oberseite des Stapels 18, die dem Niederhalteelement 30 zugewandt ist, der Fall ist, wodurch ein ebener Verlauf der einzelnen Elementteile 17 im Berührungsbereich und daher auch in dem in Fig. 2 rechts vom Niederhalteelement 30 befindlichen Auffächerbereich gewährleistet ist. Das Niederhalteelement 30, insbesondere in Form des Gleitkörpers 32, kann in Querrichtung betrachtet an beiden überstehenden Enden gerundet sein, so dass diese überstehenden und abgerundeten Endränder bei Freigabe des Stapels 18 in diesem Wirkungsbereich und beim Hochdrücken durch den Stapel 18 jeweils ein Hochdrücken der beidseitig von oben daran aufliegenden Randbereiche des Aufnahmeelements 28 mitsamt den daran befindlichen Teilen der Längsverschlusseinrichtung 29 derart bewirken, dass die Elementteile 17 des Stapels 18 mit ihren benachbarten Rändern keinen Berührungskontakt mit den vorgenannten Randteilen des Aufnahmeelements 28 und der Längsverschlusseinrichtung 29 haben, wie Fig. 4 zeigt, wodurch sich der dadurch in diesem Bereich zum Auffächern in Pfeilrichtung 20 freigegebene Bereich des Abdeckelements 16 leicht und störungsfrei nach oben selbsttätig auffächern kann. Derartiges kann dadurch noch begünstigt werden, dass das Niederhalteelement 30 in Schließrichtung des beweglichen Teils 31, z.B. des Schiebers, der Längsverschlusseinrichtung 29 betrachtet, das heißt gegensinnig zum Pfeil 26 betrachtet, in Abstand von dem beweglichen Teil 31 angeordnet ist oder sich in dieser genannten Schließrichtung über diesen beweglichen Teil 31 hinauserstreckt, wie aus Fig. 2 und 3 ersichtlich ist. Aus insbesondere Fig. 2 ist ersichtlich, dass das Niederhalteelement 30, insbesondere in Form des Gleitkörpers 32, an seiner in Schließrichtung gesehenen vorderen Seite eine Abrundung 33 aufweist. Ausgehend von dieser abgerundeten vorderen Seite kann sich das Niederhalteelement 30 gegen die Schließrichtung und in Pfeilrichtung 26 gesehen unterseitig etwa keilförmig verjüngen, was durch die unterseitige Schrägfläche 34 erreicht ist. Dadurch ist erreicht, dass im Berührungsbereich zwischen der Oberseite des Stapels 18 und dem Niederhalteelement 30, insbesondere der vorderen Seite mit Abrundung 33 dieses, im wesentlichen eine Linienberührung erfolgt, die ein selbsttätiges Auffächern des daran angrenzenden freigegebenen Bereichs des Abdeckelements 16 in Pfeilrichtung 20 begünstigt, umso mehr, wenn aufgrund der wirkenden Spannkräfte im Wirkungsbereich des Niederhalteelements 30, insbesondere Gleitkörpers 32, ein Eindrücken des Niederhalteelements 30 mit dessen vorderem Bereich in die Oberseite des Stapels 18 geschieht.

Das Abdeckelement 16 in Gestalt des plissierten Kunststoffteiles, insbesondere der plissierten Kunststofffolie, ist im Aufnahmeelement 28 bei geschlossener Längsverschlusseinrichtung 29 zumindest im wesentlichen über die gesamte Länge des dabei gebildeten Stapels 18 aufgenommen, wobei das Aufnahmeelement 28 mit seinem unteren Elementstreifen 35 einen Randteil 24 bildet, an dem das Abdeckelement 16 z.B. mit einer daran festen Fixierleiste 38 oder mit seinem letzten, diesem Elementstreifen 35 zugewandten Elementteil 17 befestigt sein kann, z.B. durch Kleben od. dgl. Mit diesem Randteil 24 ist die Verschlusseinrichtung 10 mittels mindestens eines Befestigungselements 36 am zugeordneten Rand 12 der Öffnung 11 festlegbar. Dieses Befestigungselement 36 besteht z.B. aus einem Klettverschluss üblicher Art, der zwei jeweils rückseitig anklebbare und miteinander nach Klettart durch Zusammendrücken verbindbare bzw. durch Trennen lösbare Elemente aufweist. Beim gezeigten Ausführungsbeispiel ist als mindestens ein Befestigungselement 36 ein Klettverschlussstreifen dargestellt, der sich über die ganze Länge des Randteils 24, insbesondere des unteren Elementstreifens 35 des Aufnahmeelements 28, erstreckt. Statt dessen können auch einzelne Streifenabschnitte in Abständen voneinander platziert sein oder statt streifenförmiger Abschnitte auch solche mit anderer Randkontur vorgesehen sein, die einerseits auf der zugewandten Seite des Randes 12 und andererseits des Elementstreifens 35 befestigt, z.B. angeklebt, sind. Derartige Befestigungselemente 36 ermöglichen in einfacher Weise eine nachträgliche und dabei lösbare Anbringung der Verschlusseinrichtung 10 als in sich funktionsfähiges Gebilde.

Das Abdeckelement 16 weist ferner an der dem Randteil 24 gegenüberliegenden anderen Seite, z.B. Oberseite des Stapels 18, einen Randteil 25 auf, der entweder durch ein oder mehrere in diesem Bereich z.B. durch Kleben miteinander verbundene Elementteile 17 selbst gebildet sein kann oder der, wie Fig. 1, 2 und 5 zeigen, als besonderes etwa streifenförmiges Bauteil an diesem Rand des Abdeckelements 16 befestigt ist, z.B. durch Kleben od.dgl. Dieser an dem einen freien, beim Auffächern mit auffächerbaren Rand des Abdeckelements 16 vorgesehene Randteil 25 oder der durch das Abdeckelement 16, insbesondere die Elementteile 17, selbst gebildete, nicht gezeigte Randteil ist zum völligen Auffächern des Abdeckelements 16 von Hand betätigbar. Befindet sich das Abdeckelement 16 z.B. im völlig zugefächerten Zustand unter Bildung des Stapels 18, wie dies in Fig. 5 gezeigt ist, so wird die Auffächerung dadurch eingeleitet, dass der bewegliche Teil 31, z.B. Schieber, der Längsverschlusseinrichtung 29, z.B. eines Reißverschlusses, und damit das Niederhalteelement 30 in Öffnungsrichtung des geschlossenen Aufnahmeelements 28 gemäß Pfeil 26 von Hand bewegt wird. Unter der federnden Rückstellkraft des nun frei werdenden Bereichs des Stapels 18 fächert der frei werdende Bereich des Abdeckelements 16 frei in Pfeilrichtung 20 auf, da sich das Aufnahmeelement 28 bei der Betätigung des beweglichen Teils 31 und des Niederhalteelements 30 nach oben und soweit zur Seite hin öffnet, dass das Abdeckelement 16 störungsfrei nach oben hin austreten kann, wie Fig. 2 zeigt. Wird der bewegliche Teil 31 und damit das Niederhalteelement 30 in Pfeilrichtung 26 weiterbewegt und die Längsverschlusseinrichtung 29 in Längsrichtung weiter geöffnet und damit das Aufnahmeelement 28 oberseitig ebenfalls weiter geöffnet, so erfolgt mit zunehmender Bewegung in Pfeilrichtung 26 eine weitere zunehmende Auffächerung von entsprechenden Bereichen des Abdeckelements 16. Der bewegliche Teil 31 mit dem Niederhalteelement 30 kann in Pfeilrichtung 26, betrachtet in Fig. 2, z.B. bis zum dortigen Ende des Aufnahmeelements 28 und auch noch über dieses hinaus bewegt werden, so dass das Abdeckelement 16 gänzlich freigegeben wird und sich unter der Wirkung der in den Knicken 19 im Stapelzustand gespeicherten Federenergie selbsttätig gänzlich in die Abdeckstellung auffächern kann. Reicht je nach Gestaltung dieses selbsttätige Auffächern in Pfeilrichtung 20 nicht dazu aus, den gänzlichen Abdeckzustand gemäß Fig. 1 herbeizuführen, so kann der Benutzer der Verschlusseinrichtung 10 am Randteil 25 anfassen und über diesen das Abdeckelement 16 in Pfeilrichtung 20 gänzlich in die Abdeckstellung gemäß Fig. 1 bewegen. Zur Sicherung dieser Abdeckstellung ist sodann der Randteil 25 mittels mindestens eines Befestigungselements 37 am zugeordneten Rand 13 der Öffnung 11 festlegbar. Auch dieses mindestens eine Befestigungselement 37 ist so ausgebildet wie das mindestens eine Befestigungselement 36, auf dessen Beschreibung verwiesen wird.

Vorteilhaft kann es sein, wenn der Randteil 25, der z.B. aus einer flachen Leiste besteht, quer zur Auffächerebene des Abdeckelements gesehen, also quer zur Zeichenebene gemäß Fig. 1 betrachtet, biegesteif ist, jedoch unter der Wirkung des in Fig. 2 von oben darauf drückenden Niederhalteelements 30 in Biegerichtung nachgiebig ist.

Die beschriebene Verschlusseinrichtung 10 kann als betriebsfertige Einheit geliefert und bei Bedarf, auch nachträglich, in beschriebener Weise im Bereich der Öffnung 11 angebracht werden bzw. bei Nichtbedarf wieder entfernt werden. Sie stellt hinsichtlich der einzelnen Komponenten ein einfaches, kostengünstiges und leichtes Gebilde dar und ist in einfacher Weise vom Benutzer zu handhaben und im Betrieb funktionssicher. Dadurch, dass das Abdeckelement 16 aus einem dauerhaft plissierten Kunststoffteil, insbesondere einer Kunststofffolie, gebildet ist, bei der die einzelnen Elementteile 17 und Knicke 19 einstückige Bestandteile dieses Kunststoffteiles sind, ist ein besonders kostengünstiges, leichtes und einfaches Abdeckelement 16 geschaffen, wobei bei diesem das in den Knicken 19 gespeicherte federnde Rückstellvermögen, ausgehend vom zu einem Stapel 18 zusammengefalteten Zustand, für die Bewegung des Abdeckelements 16 in den aufgefächerten Zustand und in die Abdeckstellung genutzt wird. Umgekehrt kann das Abdeckelement 16 in einfacher Weise unter äußerer Krafteinwirkung von dem aufgefächerten Zustand in den Stapelzustand zugefächert werden (Fig. 5), wobei die dazu nötige äußere Kraft in einfacher Weise über die Bewegung des beweglichen Teils 31 der Längsverschlusseinrichtung 29 mit dem Niederhalteelement 30 daran gegensinnig zum Pfeil 26 aufgebracht werden kann, wonach mit fortlaufender Bewegung entgegen der Pfeilrichtung 26 der entsprechende Bereich des Abdeckelements 16 zugefächert und der Stapel 18 gebildet wird. Diese Bewegung geschieht in einfacher Weise ähnlich der Schließbewegung eines Reißverschlusses, wobei die Freigabe zur selbsttätigen Auffächerung ebenfalls ähnlich der Öffnungsbewegung eines Reißverschlusses in Pfeilrichtung 26 geschieht. Diese Handhabung ist einfach und betriebssicher. Sollte das selbsttätige Rückfederungsvermögen beim sich auffächernden Abdeckelement 16 nicht ausreichen, kann der Benutzer durch Anfassen am Randteil 25 und Schwenkung dieses in Pfeilrichtung 20 die weitere Auffächerung bis hin in die Abdeckstellung gemäß Fig. 1 unterstützen oder bewirken.

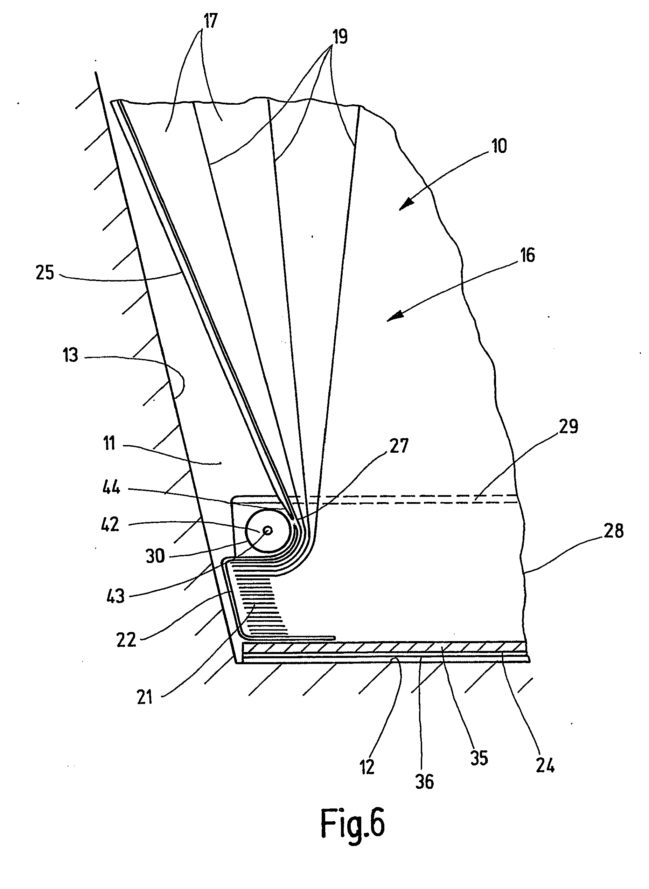

Bei dem in Fig. 6 gezeigten zweiten Ausführungsbeispiel sind für die Teile, die dem ersten Ausführungsbeispiel entsprechen, gleiche Bezugszeichen verwendet, so dass dadurch zur Vermeidung von Wiederholungen auf die Beschreibung des ersten Ausführungsbeispieles in Fig. 1 bis 5 Bezug genommen ist. Beim zweiten Ausführungsbeispiel in Fig. 6 ist das Niederhalteelement 30 als Rollkörper 42, insbesondere in Form einer Walze, ausgebildet. Auch hierbei erstreckt sich der Rollkörper 42 mit Vorteil zumindest über die Breite der einzelnen Elementteile 17, wobei der Rollkörper 42 mit Vorzug sogar beidseitig über die Elementteile 17 hinausreichen kann. Der Rollkörper 42 ist, wie nicht weiter gezeigt ist, am beweglichen Teil 31 der mindestens einen Längsverschlusseinrichtung 29 um seine Achse 43 drehbar gehalten. Statt der Gleitbewegung beim ersten Ausführungsbeispiel ergibt sich aufgrund des Rollkörpers 42 in Fig. 6 eine Abrollbewegung des Rollkörpers 42. Das Niederhalteelement 30 ist in dieser Form noch leichtgängiger als dasjenige beim ersten Ausführungsbeispiel.

In Fig. 6 ist ferner angedeutet, dass der Randteil 25 anders als beim ersten Ausführungsbeispiel nicht bis zu dem in Fig. 6 linken Endbereich des gemeinsamen Bereichs 21 des Abdeckelements 16 reicht, sondern vorher und in der Weise endet, dass der Rollkörper 42 in der in Fig. 6 dargestellten völlig aufgefächerten Abdeckstellung des Abdeckelements 16 noch nicht in Berührungskontakt mit dem Randteil 25 steht. Das dem Rollkörper 42 zugewandte Ende des Randteils 25 kann etwa keilförmig abgeflacht sein durch eine entsprechende Schrägfläche 44. Wird ausgehend von der in Fig. 6 gezeigten Abdeckstellung durch Bewegung des nicht gezeigten beweglichen Teils der Längsverschlusseinrichtung 29 gegen die Öffnungsrichtung gemäß Pfeil 26 die Zufächerung des Abdeckelements 16 eingeleitet, überrollt der Rollkörper 42 die Schrägfläche 44 und hiernach die Außenfläche des Randteils 25. Im übrigen erfolgt die Handhabung der Verschlusseinrichtung gemäß Fig. 6 so wie diejenige beim ersten Ausführungsbeispiel.

Bei einem anderen, nicht gezeigten Ausführungsbeispiel kann das Niederhalt-element 30 in Form des Rollkörpers 42 auch längs des Aufnahmeelements 28 beweglich und geführt sein, z.B. in beidseitigen Längsnuten des Aufnahmeelements 28 längsverschieblich geführt sein, wobei die Längsbewegung in Pfeilrichtung 26 bzw. gegensinnig dazu durch äußere Betätigung erfolgt, z.B. analog dem ersten Ausführungsbeispiel durch einen beweglichen Teil einer Längsverschlusseinrichtung 29, z.B. ähnlich einem Schieber eines Reißverschlusses. Statt dessen kann der Rollkörper 42 in einfacher Weise den Gleitkörper 32 in Fig. 1 an der dortigen Stelle ersetzen und z.B. in einer Gabel drehbar gelagert sein, die an der Unterseite des beweglichen Teils 31 gehalten ist.

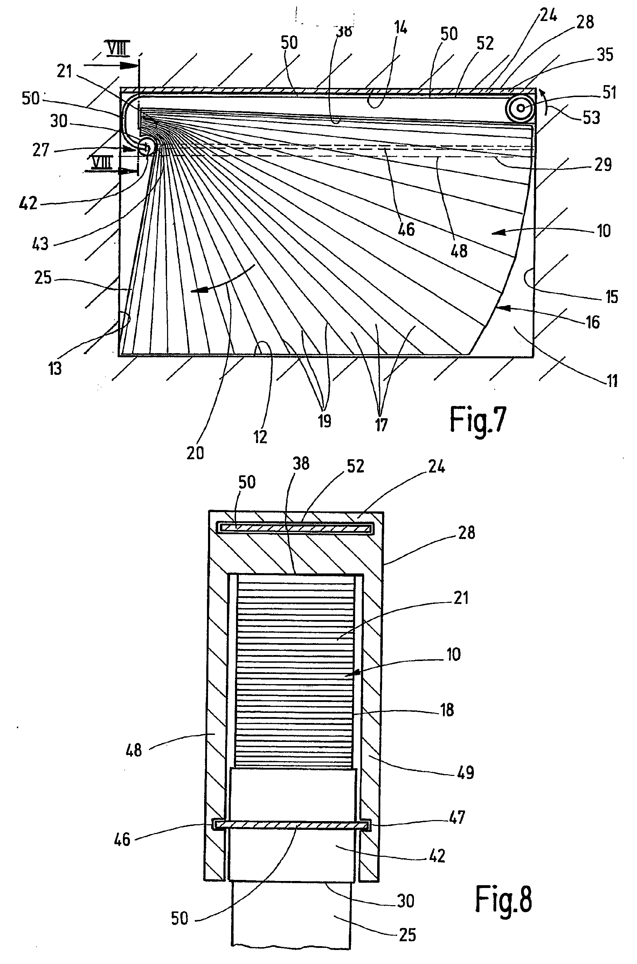

Bei dem in Fig. 7 und 8 gezeigten dritten Ausführungsbeispiel sind für die Teile, die dem ersten bzw. zweiten Ausführungsbeispiel entsprechen, gleiche Bezugszeichen verwendet, so dass dadurch auf die Beschreibung dieser Ausführungsbeispiele zur Vermeidung von Wiederholungen Bezug genommen ist.

Während die in Fig. 1 bis 6 gezeigte Öffnung 11 z.B. eine Fenster- oder Türöffnung eines Fahrzeugfensters, insbesondere bei einem Kraftfahrzeug, darstellt und die dortige Verschlusseinrichtung 10 für derartige Öffnungen 11 von Fahrzeugen, insbesondere Kraftfahrzeugen, vorgesehen ist, kann es sich bei der Öffnung 11 in Fig. 7 um ebenfalls eine solche Öffnung oder z.B. um eine Fensteröffnung eines Bauwerks, z.B. eines Hauses, handeln. Hierbei ist die Verschlusseinrichtung 10 im Bereich des oberen Randes 14 und derart angebracht, dass die Auffächerung des Abdeckelements 16 in die in Fig. 7 gezeigte Abdeckstellung in Pfeilrichtung 20 von rechts nach links erfolgt. Das Niederhalteelement 30 ist als Rollkörper 42, insbesondere als Walze, ausgebildet, die längs des Aufnahmeelements 28 in einer beidseitigen Nut 46 und 47 z.B. in horizontaler Richtung beweglich und geführt ist. Das Aufnahmeelement 28, das zugleich den Randteil 24 bildet, besteht z.B. aus einer Leiste mit U-Profil, das in Fig. 7 und 8 nach unten hin offen ist und zwei Schenkel 48, 49 aufweist, die dazwischen einen Aufnahmeraum für das zum Stapel 18 zugefächerte Abdeckelement 16 bilden. An dem entlang der Nuten 46, 47 in den Schenkeln 48 bzw. 49 beweglichen und geführten Niederhaltelement 30 in Form des Rollkörpers 42 greift ein schematisch angedeutetes Band 50 an, das auf eine Aufwickelrolle 51 aufwickelbar bzw. davon abgebbar ist. Die Aufwickelrolle 51 kann am in Fig. 7 linken Endbereich oder, wie gezeigt, rechten Endbereich oder zwischen diesen Endbereichen des Aufnahmeelements 28 an oder in diesem angeordnet sein. Die Aufwickelrolle 51 besteht z.B. aus einer Federrolle oder aus einer motorisch betätigbaren Rolle. Bei der Ausbildung als Federrolle wird bei Zug auf das Band 50 dieses unter Spannung der Feder von der Aufwickelrolle 51 abgezogen, die bei Abfall der Zugkraft eine selbsttätige Aufwicklung des Bandes 50 bewirken kann. Bei der Ausbildung der Aufwickelrolle 51 als motorisch betätigbare Rolle kann diese mittels der Antriebseinrichtung im Linkslauf und/oder Rechtslauf motorisch betätigt werden. Das Niederhalteelement 30, insbesondere in Form des Rollkörpers 42, kann z.B. von Hand ausgehend von der in Fig. 7 gezeigten Stellung entlang den Nuten 46, 47 nach rechts bewegt werden, wodurch das aufgefächerte Abdeckelement 16 gegensinnig zum Pfeil 20 in beschriebener Weise bis hin zum Stapel 18 zugefächert wird.

Das Band 50 kann auch in Längsrichtung gesehen biegesteif und schubkraftübertragend ausgebildet sein, um über das Band 50 eine Bewegung des Niederhalteelements 30 in Form des Rollkörpers 42 in Fig. 7 nach rechts zu erzeugen. Ein derartig ausgebildetes Band 50 bedarf auf dem Bereich zwischen der Aufwickelrolle 51 und dem Niederhalteelement 30, insbesondere Rollkörper 42, einer Führung. Als Führung für das Band 50 ist im Aufnahmeelement 28 ein über dessen Länge reichender Schlitz 52 enthalten, der von dem in Fig. 7 links befindlichen Ende zumindest bis hin zur Aufwickelrolle 51 reicht und darin das Band 50 aufnehmen kann. Die beiden Schenkel 48, 49 enthalten am in Fig. 7 linken Ende eine in die Nut 46 bzw. 47 überleitende Bogennut, in der das Band 50 mit beiden Rändern aufgenommen und geführt ist. Bei der kraftbetätigten Bewegung des Rollkörpers 42 in Fig. 7 nach rechts wird das Band 50 mit seinen Rändern in den Nuten 46 und 47, in denen auch der Rollkörper 42 beweglich und geführt ist, geführt. Auf diese Weise ist das in Schubrichtung kraftübertragende Band 50 derart geführt, dass bei z.B. mittels Antriebs erfolgender Drehbetätigung der Aufwickelrolle 51 in Pfeilrichtung 53 das Band 50 von der Aufwickelrolle 51 abgegeben und derart vorgeschoben wird, dass dieses auf den Rollkörper 42 eine Schubkraft in Fig. 7 von links nach rechts hin ausübt und der Rollkörper 42 somit in dieser Richtung kraftbetätigt verschoben wird.

Bei einem anderen, nicht gezeigten Ausführungsbeispiel einer für jede Art von Öffnungen geeigneten Verschlusseinrichtung 10 entfällt das Band 50 mitsamt etwaiger Führung für dieses und der Aufwickelrolle 51. Statt dessen ist der Rollkörper 42, insbesondere in Form einer Walze, mittels einer nicht gezeigten Antriebseinrichtung längs des Aufnahmeelements 28, das den Randteil 24 bildet, zumindest in einer Richtung unter Zufächerung des Abdeckelements 16 kraftbetätigbar. Der Rollkörper 42 kann hierbei längs beidseitiger Nuten 46, 47 des Abdeckelements 28 verschiebbar geführt sein, wobei die zugeordnete Antriebseinrichtung die Längsverschiebung des Rollkörpers 42 und/oder dessen Rollbewegung erzeugt.

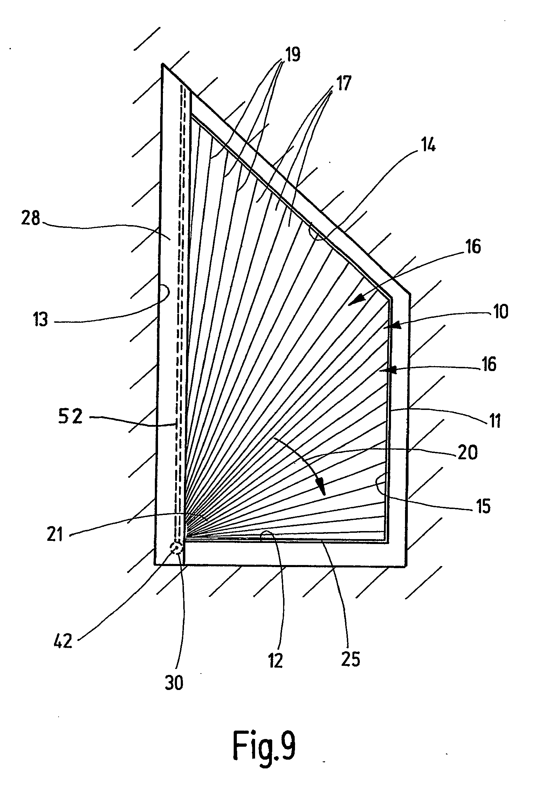

Bei dem in Fig. 9 gezeigten vierten Ausführungsbeispiel sind für die Teile, die den vorangegangenen Ausführungsbeispielen entsprechen, gleiche Bezugszeichen verwendet, so dass dadurch auf die Beschreibung der vorherigen Ausführungsbeispiele zur Vermeidung von Wiederholungen Bezug genommen ist.

Fig. 9 zeigt die Verschlusseinrichtung 10 eingebaut in eine schräge Fensteröffnung 11, bei der der obere Rand 14 schräg verläuft. Die Richtung, in der das Abdeckelement 16 selbsttätig in die dargestellte Verschlussstellung auffächerbar ist, ist mit dem Pfeil 20 angedeutet. Bei dieser Anordnung verläuft das Aufnahmeelement 28 vertikal und ist am in Fig. 9 linken Rand 13 angebracht, wobei sich die zuvor erläuterten Bewegungen dann in dieser gegenüber den vorherigen Ausführungsbeispielen um z.B. 90° gedrehten Position abspielen. Fig. 9 zeigt, dass die Verschlusseinrichtung 10 in einfacher Weise zur im wesentlichen völligen Abdeckung z.B. auch eines Schrägfensters bei Bauwerken geeignet ist.

Soweit bezüglich der Ränder der Öffnung 11 und der Ränder des Abdeckelements 16 Begriffe wie oben, unten oder seitlich verwendet sind, versteht es sich, dass auch eine räumliche Vertauschung oder sonstige andere räumliche Anordnung und hierbei auch eine liegende innerhalb einer etwa horizontalen oder schrägen Ebene eingeschlossen ist.

Als Kunststofffolie, aus der das Abdeckelement 16 gebildet ist, hat sich z.B. eine solche als geeignet erwiesen, die unter der Bezeichnung "Mylar A" von der Firma Dupont im Handel angeboten wird und z.B. eine Polyesterfolie, zweiachsig gereckt ist. Diese Kunststofffolie kann eine Dicke z.B. von 100 u haben oder im Vergleich dazu z.B. auch dünner sein. Des weiteren kann das Abdeckelement 16, auch aus z. B. Papier, Metallfolie, Verbundwerkstoffen od. dgl. gebildet sein.

Das aus einer dauerhaft plissierten Kunststofffolie gebildete Abdeckelement 16 ist als durch kraftbetätigtes Auffächern und/oder Zufächern aufladbarer mechanischer Energiespeicher ausgebildet. Das Abdeckelement 16 kann ausgehend von einer Nichtenergiespeicherstellung durch kraftbetätigtes Zufächern in eine Energiespeicherstellung überführbar sein. Zusätzlich dazu oder statt dessen kann das Abdeckelement 16 auch ausgehend von einer Nichtenergiespeicherstellung durch kraftbetätigtes Auffächern in eine Energiespeicherstellung überführbar sein. Die Knicke 19 der Elementteile 17 sind derart selbstfedernd, dass die Elementteile 17 bei kraftbetätigtem Zufächern oder Auffächern im Bereich der Knicke 19 federnd aufgeladen werden unter Speicherung der entsprechenden Energie und bei Freigabe unter der Wirkung des federnden Rückstellvermögens und damit der gespeicherten Energie selbsttätig bis maximal in die Nichtenergiespeicherstellung auffächerbar bzw. zufächerbar sind.

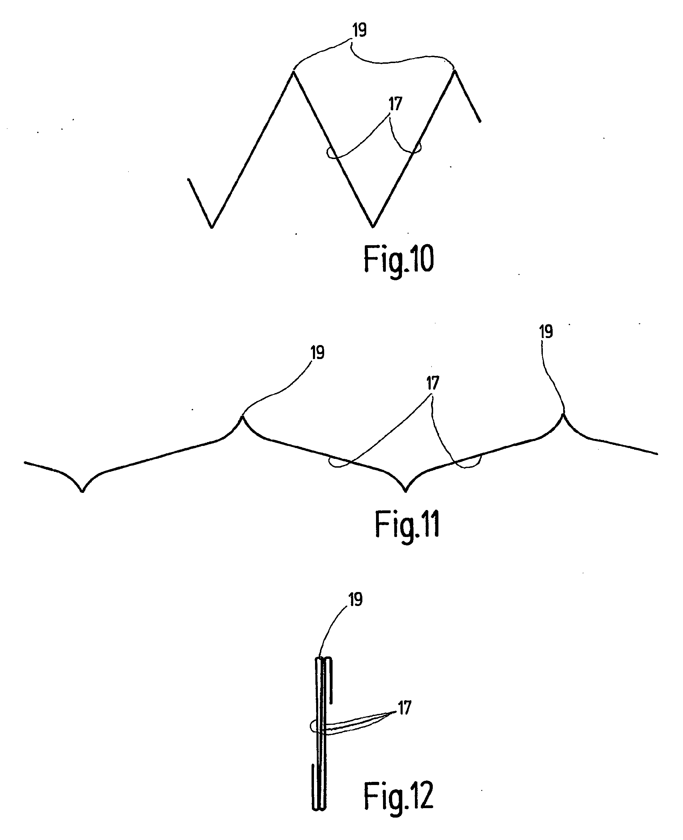

In Fig. 10 sind einige Elementteile 17 gezeigt, wobei sich das Abdeckelement 16 mit diesen Elementteilen 17 hier z.B. in der Nichtenergiespeicherstellung befindet. In diesem Zustand sind die Knicke 19 im Querschnitt gesehen etwa V-förmig. In Fig. 11 ist ein anderer Zustand des Abdeckelements 16 gezeigt. Dieser Zustand wird dann erreicht, wenn ausgehend z.B. vom Zustand gemäß Fig. 10 das Abdeckelement 16 durch Kraftbetätigung über das selbsttätige Auffächern hinausgehend aufgefächert wird, das heißt in Fig. 10 betrachtet nach links und rechts auseinandergezogen wird. Dann ergibt sich ein Zustand, bei dem die Knicke 19 im Querschnitt gesehen V-förmig mit an jeden V-Schenkel anschließender Schwinge geformt sind.

In Fig. 12 ist ein Zustand des Abdeckelements 16 gezeigt, in dem dieses ausgehend von Fig. 10 zugefächert ist in eine Energiespeicherstellung. In diesem Zustand weisen die Knicke 19 etwa konvex nach außen gekrümmte V-Schenkel auf.

Die Elementteile 17 des Abdeckelements 16 sind in dem gemeinsamen Bereich 21 (Fig. 1, 2, Fig. 7) derart beweglich verbunden, dass der Randteil 25 zumindest sowohl um eine etwa rechtwinklig zur Aufspannebene des Abdeckelements 16 und somit zur Zeichenebene gemäß Fig. 1 und 7 verlaufende Achse schwenkbar ist als auch um eine in der Aufspannebene oder parallel zu dieser Ebene verlaufende Achse.

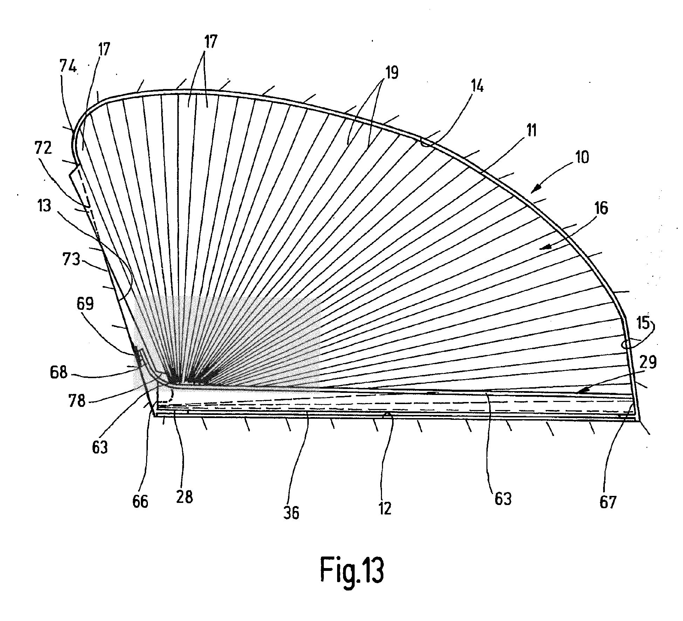

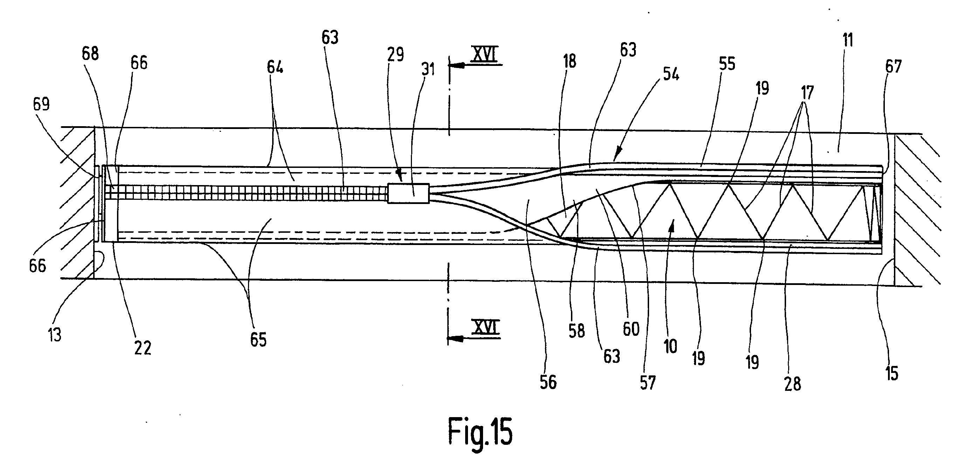

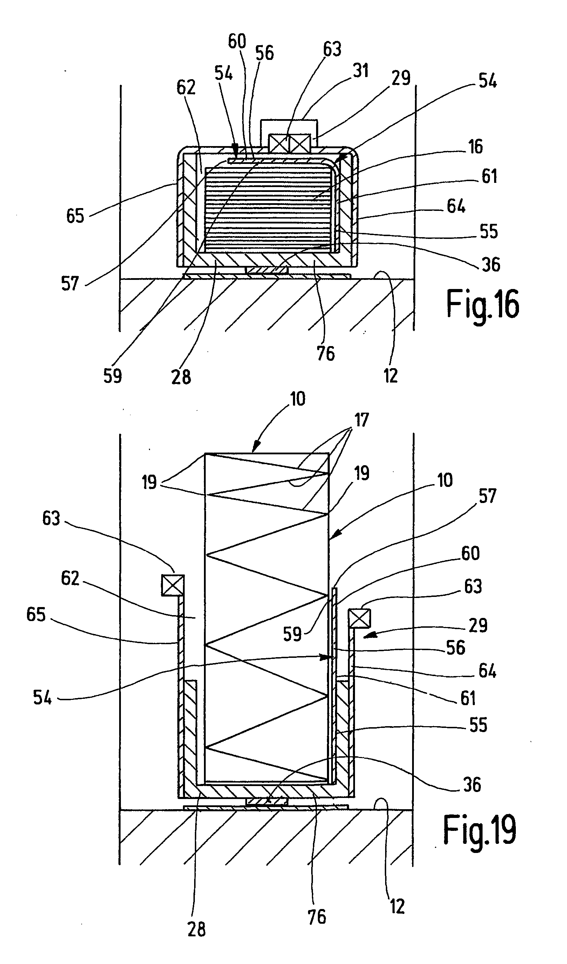

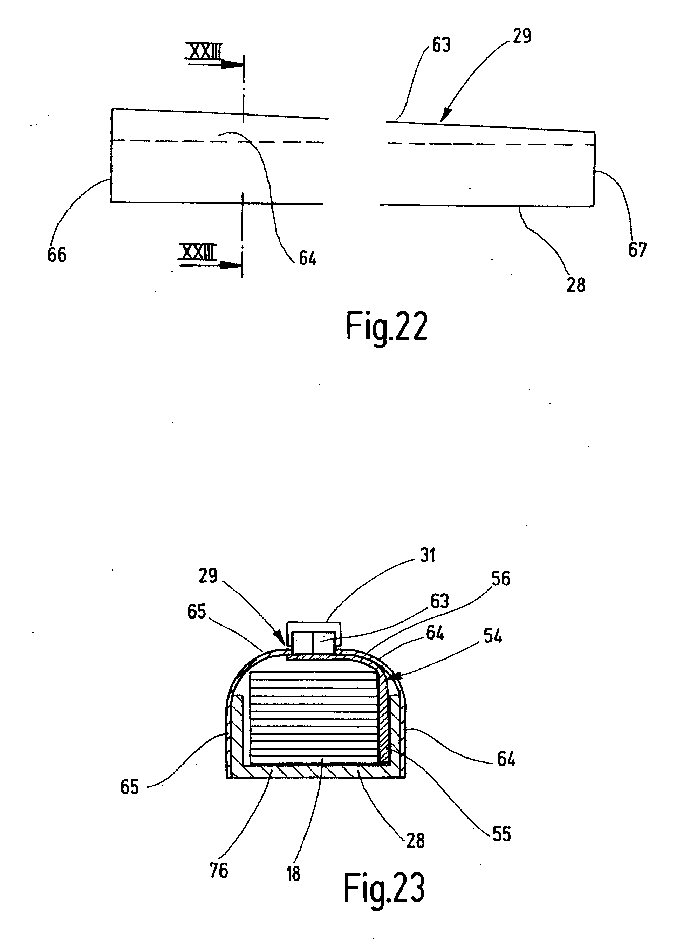

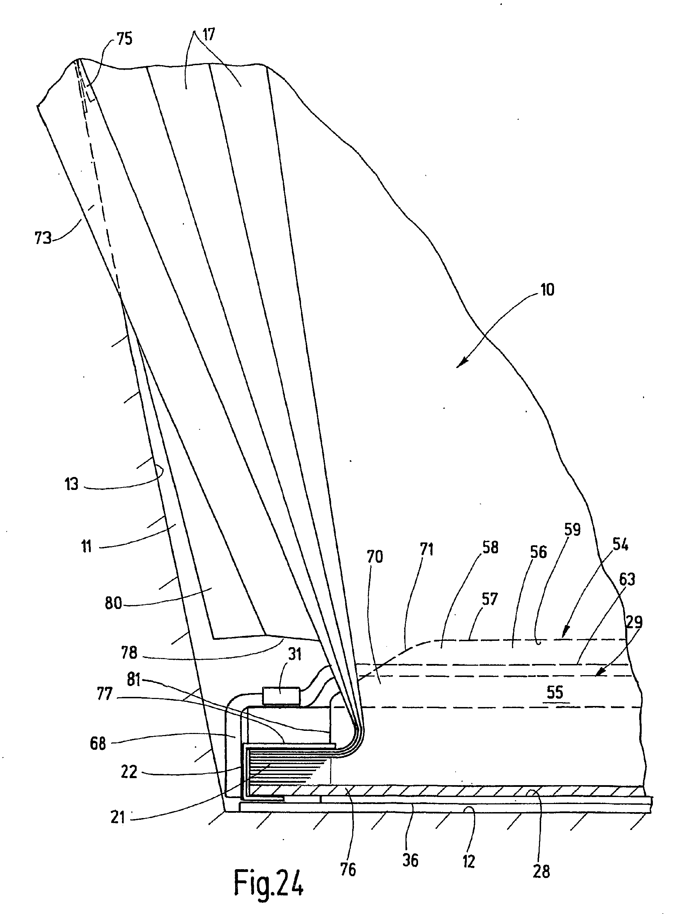

Bei dem in Fig. 13 bis 23 gezeigten fünften Ausführungsbeispiel und in Fig. 24 gezeigten sechsten Ausführungsbeispiel sind für die Teile, die den vorhergehenden Ausführungsbeispielen entsprechen, gleiche Bezugszeichen verwendet, so dass dadurch zur Vermeidung von Wiederholungen auf die vorherige Beschreibung Bezug genommen ist. Auch hier weist die Verschlusseinrichtung 10 ein entsprechend gestaltetes Abdeckelement 16 und ein Aufnahmeelement 28 auf, das z. B. als einen Randteil 24 bildendes Profil z. B. U-Profil ausgebildet ist und das Abdeckelement 16 dann, wenn dieses zu einem Stapel 18 zugefächert ist, aufnehmen kann. Die Verschlusseinrichtung 10 weist ferner eine Längsverschlusseinrichtung 29 in Form eines Längsbandverschlusses 63, z. B. eines Reißverschlusses, auf. Die Längsverschlusseinrichtung 29 kann Teil des Aufnahmeelements 28 sein oder je nach Gestaltung durch dieses selbst gebildet sein. Bei der Gestaltung der Längsverschlusseinrichtung 29 als Reißverschluss ist dieser in üblicher Weise beidseitig mit Zahnreihen versehen, längs denen zum Öffnen und Schließen als beweglicher Teil 31 ein Schieber bewegbar ist. Die Längsverschlusseinrichtung 29 weist auf beiden Seiten des Aufnahmeelements 28 Seitenteile 64 und 65 auf, die vorzugsweise flexibel sind. Mittels dieser Seitenteile 64, 65 kann die Längsverschlusseinrichtung 29 am Aufnahmeelement 28, z. B. am Profil, innen oder, wie in den Zeichnungen gezeigt ist, außen unter Überdeckung der entsprechenden Teile des Aufnahmeelements 28 angreifen. Bei einem anderen, nicht gezeigten Ausführungsbeispiel sind statt dessen die Seitenteile 64, 65 der Längsverschlusseinrichtung 29 mit dem Aufnahmeelement 28 einstückig. Die Anordnung ist so getroffen, dass bei geschlossener Längsverschlusseinrichtung 29 (Fig. 16, Fig. 23) deren Schließlinie ausmittig, bezogen auf das Aufnahmeelement 28, und dabei mit geringerem Querabstand von einer Seite des Aufnahmeelements 28 als von der anderen Seite des letzteren verläuft. Bei der Darstellung in Fig. 15 ist die Verschlusseinrichtung 10 innerhalb der Öffnung 11 so angeordnet, dass in Abstand oberhalb des Aufnahmeelements 28 die nicht gezeigte Scheibe, die die Öffnung 11 verschliessen kann, verläuft, die den darüber befindlichen Außenbereich abgrenzt vom in der Zeichnung darunter befindlichen Innenbereich. Die Schließlinie der Längsverschlusseinrichtung 29 verläuft im geschlossenen Zustand letzterer somit in Richtung zum Außenbereich hin ausmittig. Das Aufnahmeelement 28, insbesondere das Profil, kann - über die Länge des Stapels 18 gesehen - eine gleichförmig verlaufende Höhe aufweisen oder statt dessen so gestaltet sein, dass an dem Endbereich 66, der dem gemeinsamen Bereich 21 der Elementteile 17 zugeordnet ist, eine größere Höhe vorliegt als am gegenüberliegenden Ende 67 (Fig. 22).

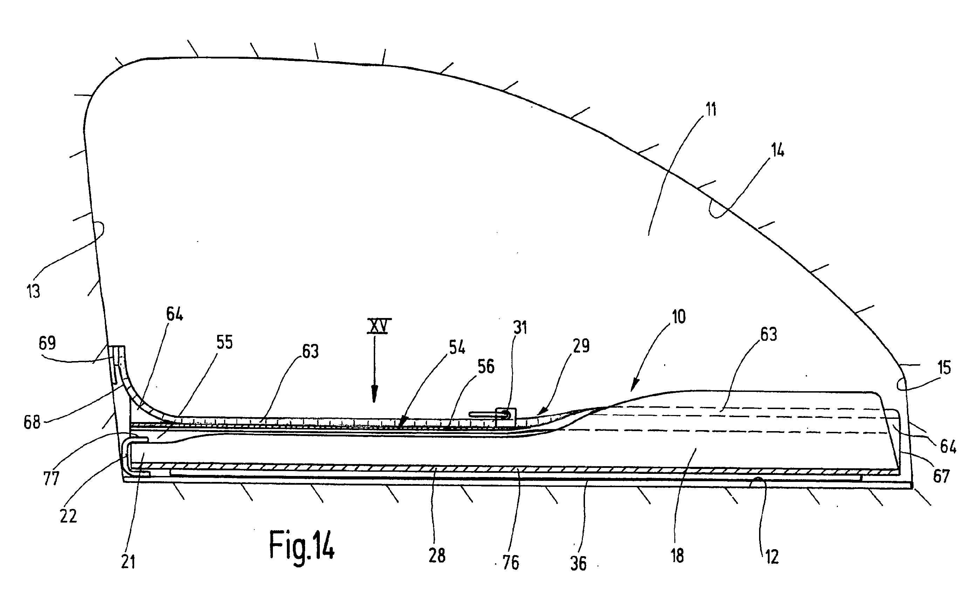

Bei der Verschlusseinrichtung 10 gemäß dem fünften Ausführungsbeispiel ist der Längsverschlusseinrichtung 29 eine Deckeinrichtung 54 zugeordnet, die zumindest im wesentlichen über die gesamte Länge des zum Stapel 18 zugefächerten Abdeckelements 16 verläuft. Die Deckeinrichtung 54 ist beim Schließen der Längsverschlusseinrichtung 29 mittels der Längsverschlusseinrichtung 29 von zumindest einer Seite her und zusätzlich im wesentlichen von oben auf jeweilige zuzufächernde Bereiche des Stapels 18 bewegbar, wobei diese Bereiche des Stapels 18 von der Deckeinrichtung 54 beaufschlagt und überdeckt werden. Die Deckeinrichtung 54 befindet sich zwischen dem Stapel 18 und der Längsverschlusseinrichtung 29 und schützt den Stapel 18, insbesondere die einzelnen Elementteile 17 des Abdeckelements 16, vor der Längsverschlusseinrichtung 29. Beim Schließen der Längsverschlusseinrichtung 29 wird die Deckeinrichtung 54 in beschriebener Weise auf jeweilige zuzufächernde Bereiche des Stapels 18 bewegt mit in Längsrichtung fortschreitender, zumindest teilweiser Überdeckung des Stapels 18. Beim gegensinnigen Öffnen der Längsverschlusseinrichtung 29 durch Verschieben des beweglichen Teils 31 in Fig. 14 und 15 nach links wird die Deckeinrichtung 54 fortschreitend freigegeben unter entsprechender Freigabe des sich auffächernden Stapels 18.

Die Deckeinrichtung 54 weist zumindest ein Abdeckteil 56 auf, das im wesentlichen von oben auf jeweilige zuzufächernde Bereiche des Stapels 18 mit Überdeckung dieser bewegbar ist. Beim gezeigten Ausführungsbeispiel ist zusätzlich zu dem mindestens einen Abdeckteil 56 ein letzterem zugeordnetes Befestigungsteil 55 vorgesehen. Das Befestigungsteil kann am Aufnahmeelement 28 angeordnet sein, z. B. innenseitig eines Schenkels des Aufnahmeelements 28 befestigt sein. Das Befestigungsteil 55 ist als seitliches Wandteil und das Abdeckteil 56 als ein daran anschließendes Oberteil ausgebildet. In dieser Gestaltung ist die Deckeinrichtung 54 ein einstückiges Gebilde. Die Breite des Abdeckteils 56 ist so bemessen, dass diese zumindest einen Teil der Breite des Stapels 18 überdeckt, wie insbesondere aus Fig. 16 ersichtlich ist. Hinsichtlich der Länge erstreckt sich die Deckeinrichtung 54 über einen wesentlichen Teil der Stapellänge, insbesondere zumindest über die Länge des Stapels 18, auf der zusammengefaltete Enden der Elementteile 17 vorliegen, die beim Öffnen und Schließen der Längsverschlusseinrichtung 29 durch die Deckeinrichtung 54 geschützt werden. Das Abdeckteil 56 der Deckeinrichtung 54 ist vorzugsweise im Bereich seiner freien Längskante 57 in Längsrichtung zumindest in Grenzen biegesteif. Dies hat den Vorteil, dass beim Schließen der Längsverschlusseinrichtung 29 die Deckeinrichtung 54, insbesondere das Abdeckteil 56, durch das Schließen der Längsverschlusseinrichtung 29 dem beweglichen Teil 31 vorlaufend ebenfalls in Abdeckposition gezwungen wird. Die Längskante 57 ist in dieser Ausbildung somit in der Lage, in Grenzen Kräfte auf die Deckeinrichtung 54 im Sinne einer Überführung in die Abdeckstellung auszuüben. Da die Längsverschlusseinrichtung 29 in beschriebener Weise hinsichtlich ihrer Schließlinie ausmittig verläuft, kann dadurch das Abdeckteil 56 beim Schließen der Längsverschlusseinrichtung 29 früher seine erläuterte Wirkung entfalten. Im geschlossenen Zustand gemäß Fig. 16 ragt das Abdeckteil 56 in der Zeichnung nach links über den beweglichen Teil 31 der Längsverschlusseinrichtung 29 und deren Zahnleiste bei Ausbildung als Reißverschluss hinweg und schützt somit den zugefächerten Stapel 18 oberseitig vor Kontakt mit der Längsverschlusseinrichtung 29 und vor etwaiger Beschädigung oder Zerstörung durch diese.

Das Abdeckteil 56 kann auf seiner Innenseite 59 und/oder Außenseite 60 und/oder Längskante 57 zumindest im Bereich seines freien Längsrandes 58 eine glatte Oberfläche aufweisen. Dies dient ebenfalls dem Schutz der zugewandten Flächen der zugefächerten bzw. sich auffächernden Bereiche des Stapels 18 und erleichtert auch das Darüberfahren des beweglichen Teils 31. Bei einem nicht weiter gezeigten Ausführungsbeispiel kann das Abdeckteil 56 im Bereich seines freien Längsrandes 58 ein Zusatzteil aufweisen, das sich zumindest über einen wesentlichen Längenabschnitt des Längsrandes 58 erstreckt. Das Zusatzteil kann im Bereich der Längskante 57 des freien Längsrandes 58 angreifen. Das Zusatzteil kann als Folie ausgebildet sein, welche die Längskante 57 zumindest teilweise umgreift. Dieses Zusatzteil kann auch als Streifenelement ausgebildet sein, welches den Längsrand 58 des Abdeckteils 56 bildet. Auf diese Weise ist durch dieses Zusatzteil in besonders einfacher Weise die gewünschte Eigenschaft am Längsrand 58 des Abdeckteils 56 verwirklicht.

Die Deckeinrichtung 54 ist aus zumindest einem Flächenstreifen 61 gebildet, der zumindest in Grenzen flexibel ist. Die Deckeinrichtung 54,insbesondere deren Flächenstreifen 61, kann aus Stoff, Kunststoff od.dgl. Materialien gebildet sein.

Die Deckeinrichtung 54 befindet sich im Inneren 62 des zur Aufnahme des Stapels 18 vorgesehenen Aufnahmeelementes 28 oder sie ist statt dessen Teil des Aufnahmeelements 28 selbst. Von Vorteil kann es sein, wenn das Abdeckteil 56 der Deckeinrichtung 54 im Bereich seines freien Längsrandes 58 eine solche Querschnittsdicke aufweist, die größer ist als der zwischen Unterbrechungen am Längsbandverschluss 63, insbesondere zwischen Zähnen des Reißverschlusses, gemessene Abstand, so dass sichergestellt ist, dass das Abdeckteil 56 mit seinem freien Längsrand 58 nicht in derartige Unterbrechungen bzw. Zahnzwischenräume der Längsverschlusseinrichtung 29 gelangen und dort etwa verhaken und beim Betätigen der Längsverschlusseinrichtung 29 beschädigt oder zerstört werden kann oder die Betätigung behindern kann.

Anhand von Fig. 16 wird der ausmittige Verlauf der geschlossenen Längsverschlusseinrichtung 29 deutlich, der dadurch erreicht ist, dass der Abstand der Schließlinie von derjenigen Seite des Aufnahmeelements 28, welcher das Abdeckteil 56 zugeordnet ist, kleiner ist als von der anderen Seite des Aufnahmeelements 28.

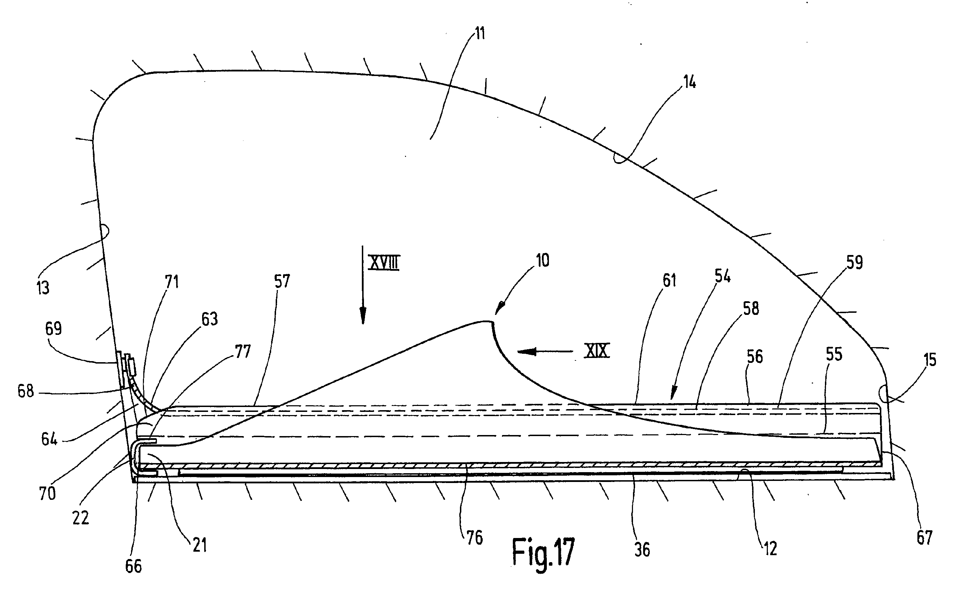

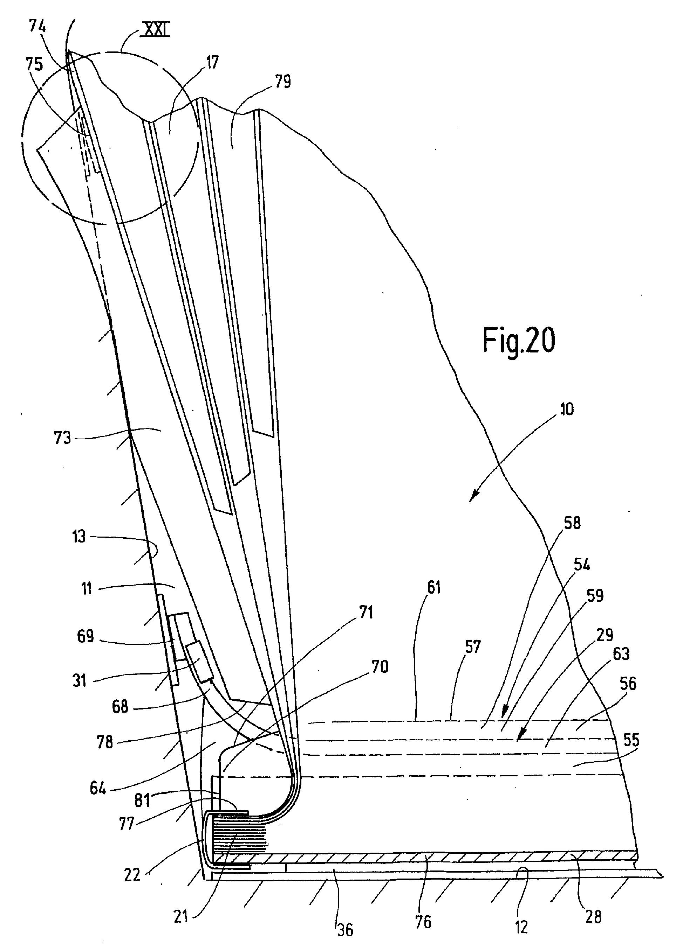

Wie sich insbesondere aus Fig. 17 und Fig. 20 ergibt, ist das Abdeckteil 56 der Deckeinrichtung 54 am Endbereich 70, der dem gemeinsamen Bereich 21 der Elementteile 17 zugeordnet ist, in Schließrichtung der Längsverschlusseinrichtung 29 gesehen, ansteigend abgeschrägt und hat dort die entsprechende Schräge 71. Dies erleichtert die Handhabung und Funktion.

In der in Fig. 13 gezeigten Abdeckstellung mit aufgefächerten Elementteilen 17 ist die Längsverschlusseinrichtung 29 von rechts (vorn) nach links (hinten) in die vollständige Öffnungsstellung gebracht. Ein über den gemeinsamen Bereich 21 der Elementteile 17 hinausragender Endabschnitt 68 der Längsverschlusseinrichtung 29 ist am dortigen Endbereich am zugeordneten Rahmenteil des Öffnungsrandes 13 mittels eines Befestigungsmittels 69, z. B. eines Klettverschlussteils, festlegbar. Bei dem in Fig. 24 gezeigten sechsten Ausführungsbeispiel hingegen ist der Endabschnitt 68 z: B. in gleicher Weise am Aufnahmeelement 28 in dessen Endbereich 66 festlegbar. In dieser Abdeckstellung gemäß Fig. 13 ergibt sich für den Längsbandverschluss 63 eine Position gemäß Fig. 19, bei der die beidseitigen Seitenteile 64 und 65 mit den Flächenbereichen, die nicht das Aufnahmeelement 28 außenseitig überdecken, nach außen abgeklappt sind unter Freigabe des zuvor gestapelten Abdeckelements 16, das nun aufgefächert ist. In gleicher Weise ist auch das Abdeckteil 56 in Fig. 19 nach rechts hin unter Freigabe des Abdeckelements 16 abgeklappt. Etwa im Überlängenbereich, d.h. im Bereich des Endabschnittes 68, des Längsbandverschlusses 63 befindet sich der bewegliche Teil 31. Soll ausgehend davon die Verschlusseinrichtung 10 in die Freigabestellung durch Zufächern ihrer Elementteile 17 bewegt werden, so wird der bewegliche Teil 31 des Längsbandverschlusses 63 von Hand in Fig. 20 nach rechts bewegt. Hierbei werden die Seitenteile 64, 65 aufeinanderzu bewegt und im Bereich der Schließlinie des Längsbandverschlusses 63 miteinander verbunden. Bei dieser Bewegung wird insbesondere mittels des beweglichen Teils 31 die Deckeinrichtung 54 in Abdeckstellung bewegt, wobei das Abdeckteil 56 mittels des Längsbandverschlusses 63 von einer Seite und im wesentlichen von oben auf jeweilige zuzufächernde Bereiche des Stapels 18 mit in Längsrichtung fortschreitender, zumindest teilweiser Überdeckung dieses bewegt wird. Die einzelnen Elementteile 17 werden somit vom Abdeckteil 56 beaufschlagt und zusammengedrückt. Da in Längsrichtung betrachtet ein Teil der Deckeinrichtung 54 einen gewissen Vorlauf in Bezug auf den beweglichen Teil 31 hat, beginnt das Überdecken und Beaufschlagen zuzufächernder Bereiche des Stapels 18 bereits in Abstand vor dem beweglichen Teil 31. Mit Bewegung des beweglichen Teils 31 in Fig. 15 nach rechts hin werden die Elementteile 17 zum Stapel 18 zusammengefächert, wobei diese auf der Seite, die dem Abdeckteil 56 zugewandt ist, vom Abdeckteil 56 überdeckt sind und das Abdeckteil 56 seinerseits vom geschlossenen Längsbandverschluss 63 überdeckt ist. In diesem Freigabezustand der Öffnung 11 ist die Verschlusseinrichtung 10 im Aufnahmeelement 28 aufgenommen und vom Längsbandverschluss 63, zumindest von dem oberen Teil der Seitenteile 64, 65, überdeckt.

Zum gegensinnigen Öffnen des Längsbandverschlusses 63 wird dessen beweglicher Teil 31 in Fig. 15 nach links verschoben. Die Seitenteile 64, 65 öffnen sich dabei in Abstand nachlaufend vom beweglichen Teil 31. Das Abdeckteil 56 der Deckeinrichtung 54 überdeckt die oberseitigen Bereiche des Stapels und gibt diese in entsprechender Weise nacheinander fortschreitend frei.

Zumindest die beiden Enden der Längsverschlusseinrichtung 29, insbesondere des Längsbandverschlusses 63, d.h. das in Fig. 14 linke sowie rechte Ende dieses, können im Wesentlichen unbeweglich festgelegt sein, und zwar zumindest innerhalb der Aufspannebene des Abdeckelements 16. Dies dient der Funktionssicherheit. Die Längsverschlusseinrichtung 29, insbesondere der Längsbandverschluss 63, kann vom geschlossenen Zustand ausgehend in Öffnungsrichtung zumindest über einen Teilbereich eines Endabschnittes quer zur Aufspannebene des Abdeckelements 16 beweglich sein. Dies erleichtert die Handhabung bei zuverlässiger Funktionsfähigkeit. Die Längsverschlusseinrichtung 29, insbesondere der Längsbandverschluss 63, weist in gestreckter Ausrichtung eine größere Länge als das Aufnahmelement 28 auf, derart, dass z.B. der am in Fig. 14 linken Ende hinausragende Endabschnitt 68 entsteht, der entweder in den Zeichnungen nach oben ragt und mittels des Befestigungsmittels 69 am Öffnungsrand 13 lösbar befestigbar ist oder der gemäß Fig. 24 in der Zeichnung nach unten geklappt und dort z.B. am Aufnahmeelement 28, z.B. ebenfalls mit einem Befestigungsmittel analog dem Befestigungsmittel 69 lösbar oder statt dessen unlösbar festgelegt wird.

Auch bei diesen Ausführungsbeispielen sind die Elementteile 17 im gemeinsamen Bereich 21 mittels eines Zusammenhalteteils 22 fest aufeinanderliegend zusammengespannt. Das Zusammenhalteteil 22 kann um eine etwa rechtwinklig zur Aufspannebene des Abdeckelements 16 verlaufende Achse und innerhalb der Aufspannebene zumindest in Grenzen schwenkbeweglich sein. In einer anderen Ausführungsform ist das Zusammenhalteteil 22 relativ zum Aufnahmeelement 28 unbeweglich und z. B. am Aufnahmeelement 28, zumindest an dessen Basis 76, angeordnet. Dabei kann der in oberem Abstand von der Basis 76 des Aufnahmeelements 28 angeordnete Teil 77 des Zusammenhalteteils 22 eine Länge aufweisen, die gleich oder größer als die Länge des beweglichen Teils 31 der Längsverschlusseinrichtung 29, insbesondere des Längsbandverschlusses 63, ist oder ein Mehrfaches dieser Länge beträgt. Bei der Ausbildung des Längsbandverschlusses 63 als Reißverschluss ist dessen beweglicher Teil 31 der Reißverschlussschieber. Durch diese Bemessung des Teils 77 des Zusammenhalteteils 22 ist gewährleistet, dass durch diesen Teil 77 der gemeinsame Bereich 21 der Elementteile 17 oberseitig abgedeckt und vor dem Schieber des Längsbandverschlusses 63 geschützt ist. Das Zusammenhalteteil 22 kann den Stapel 18 im gemeinsamen Bereich 21 der Elemente 17 oberseitig und/oder unterseitig und/oder rückseitig und/oder zumindest auf einer Breitseite umfassen, wodurch dieser gemeinsame Bereich 21 sicher umfasst und geschützt ist. Das Zusammenhalteteil 22 kann alternativ auch als in sich steifes Element ausgebildet sein.

Bei allen Ausführungsbeispielen in Fig. 13 bis Fig. 24 ist vorgesehen, dass das Abdeckelement 16 an dem beim Auffächern vorderen Randbereich 72 eine Handhabe 73 zum Anfassen beim Auffächern und/oder Zufächern aufweist. Die Handhabe 73 ist mit Vorzug aus einem Elementteil 17 des Abdeckelements 16 gebildet, z.B. aus dem letzten Elementteil 17 dieses. Dabei ist der die Handhabe 73 bildende Elementteil 17 als abklappbarer Streifen des Abdeckelements 16 ausgebildet. Auf diese Weise kann das Abdeckelement 16 zum Auffächern und/oder Zufächern bequem und einfach in irgendeinem Bereich der Handhabe 73 erfasst und gehandhabt werden. Dabei ergibt sich kein zusätzlicher Aufwand für die Bildung der Handhabe 73, die zudem besonders einfach ist.

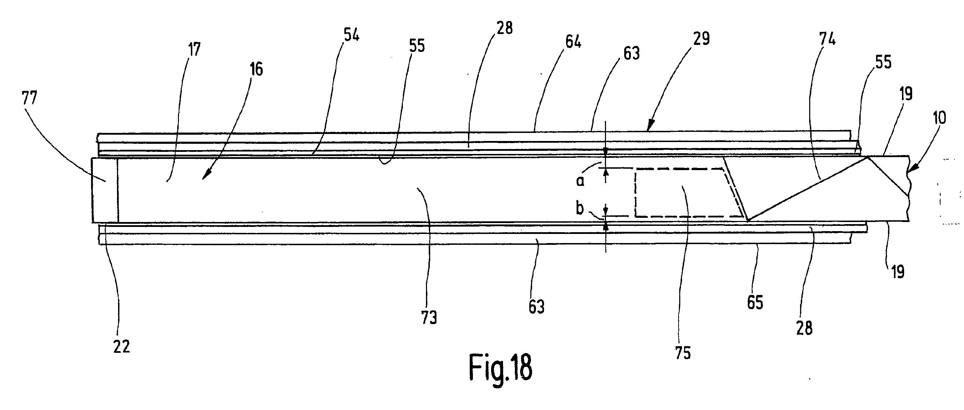

Das Elementteil 17, das auf die Handhabe 73, insbesondere den Streifen, in Züfächerrichtung als nächstes folgt, kann auf dem dortigen Endbereich ein Befestigungsmittel 75, z.B. ein Klettverschlussteil, zum lösbaren Befestigen am zugeordneten Rahmenteil des Öffnungsrandes 13 aufweisen. Dieses Befestigungsmittel 75 wird in der zugefächerten Freigabestellung des Abdeckelements 16 von der Handhabe 73 in vorteilhafter Weise teilweise oder völlig überdeckt und ist dadurch abgedeckt. Dies hat den Vorteil, dass dann das Befestigungsmittel 75 nicht sichtbar ist und außerdem beim Bewegen des beweglichen Teils 31 des Längsbandverschlusses 63 nicht stört, so dass der bewegliche Teil 31 trotz etwaiger abstehender Klettelemente des Befestigungsmittels und daraus resultierender Unebenheiten störungsfrei darüber hinweggeführt werden kann aufgrund der Überdeckung durch die Handhabe 73. Wie in Fig. 18 verdeutlicht ist, ist das Befestigungsmittel 75 unsymmetrisch auf der Breitseite des Elementteils 17 angeordnet, dergestalt, dass dieses einen geringeren Abstand von einem Knick 19 einer Breitseite als von einem Knick 19 der gegenüberliegenden Breitseite des Abdeckelements 16 hat. Wie sich aus Fig. 18 ergibt, ist demgemäß das Befestigungsmittel 75 in der Zeichnung weiter nach unten versetzt. Dies hat den Vorteil, dass das Abdeckelement 16 in der Abdeckstellung eine größere Überdeckung ermöglicht. Außerdem ist das Befestigen mittels des Befestigungsmittels 75 am Öffnungsrand 13 bzw. das Lösen von Hand bei dieser Anordnung leichter und einfacher zu bewerkstelligen.

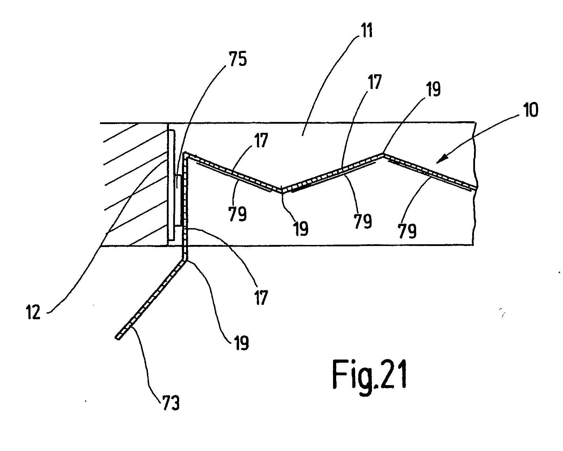

Wie sich insbesondere aus Fig. 18 und Fig. 20 ergibt, endet der die Handhabe 73 bildende Elementteil 17, insbesondere Streifen, mit einem Ende 78 in Abstand von dem gemeinsamen Bereich 21 der Elementteile 17. Auf diese Weise ist ein besonders einfaches Abklappen der Handhabe 73 möglich. Wie Fig. 21 verdeutlicht, ragt die Handhabe 73 dann, wenn sich das Abdeckelement 16 in der dargestellten Abdeckstellung befindet, in den Innenraum hinein, so dass sie besonders leicht und einfach erfasst und das Abdeckelement 16 dadurch im Bereich des Befestigungsmittels 75 gelöst und in die Freigabestellung bewegt werden kann.

In Fig. 22 ist verdeutlicht, dass das Aufnahmelement 28 über seine Länge eine gleichbleibende Profilhöhe aufweist, während die Längsverschlusseinrichtung 29, insbesondere der Längsbandverschluss 63, im geschlossenen Zustand im Endbereich 66 weiter nach oben übersteht als am gegenüberliegenden Ende 67. Dies ist z.B. durch entsprechend bemessene Seitenteile 64, 65 des Längsbandverschlusses 63 erreichbar. Dadurch erfolgt eine Anpassung an eine über den Längsverlauf des Stapels 18 gesehen unterschiedlich verlaufende Stapelhöhe; denn im zum Stapel 18 zugefächerten Zustand des Abdeckelements 16 ist die Stapelhöhe in dem Bereich, der dem gemeinsamen Bereich 21 benachbart ist, größer als am gegenüberliegenden, dem Ende 67 zugeordneten Endbereich des Abdeckelements 16, bedingt durch unterschiedliche Längen der Elementteile 17. Dieser unterschiedlich großen Stapelhöhe wird durch die Bemessung der Längsverschlusseinrichtung 29 in einfacher Weise Rechnung getragen. Wie sich aus Fig. 23 ergibt, überragt der durch das zugefächerte Abdeckelement 16 gebildete Stapel 18 die beidseitigen Wangen des Aufnahmelements 28, wobei der Stapel 18 auf diesem Bereich von oberen Teilen der Seitenteile 64, 65 umfasst und ferner zumindest auf einer Seite und im wesentlichen von oben mittels der Deckeinrichtung 54, insbesondere des Abdeckteils 56, überdeckt ist. Das Abdeckteil 56 erstreckt sich in Querrichtung des Stapels 18 betrachtet, z.B. nahezu über die gesamte Breite des Stapels 18, zumindest so weit, dass dieses über die Schließlinie des Längsbandverschlusses 63 in Querrichtung hinwegragt.

In Fig. 20 und Fig. 21 ist angedeutet, dass die einzelnen Elementteile 17 zumindest auf einer Seite mit einer flächigen Verstärkung 79 versehen sein können.

Bei dem in Fig. 24 gezeigten sechsten Ausführungsbeispiel schließt sich an die Handhabe 73 noch ein Zusatzstreifen 80 an. Dieser kann die Breite und damit die Angriffsfläche der Handhabe 73 vergrößern und hat ferner den Vorteil, dass in der gezeigten Abdeckstellung des Abdeckelements 16 die Öffnung 11 auch in diesem Bereich durch die Handhabe 73 und den Zusatzstreifen 80 abgedeckt ist, die beide dann zumindest im wesentlichen innerhalb einer Ebene verlaufen, die etwa parallel und in Abstand zu der von der Öffnung 11 aufgespannten Ebene gerichtet ist. Ferner ist durch Fig. 24 verdeutlicht, dass bei geöffneter Längsverschlusseinrichtung 29 der bewegliche Teil 31 lediglich so weit nach links verfahren werden muss, dass dieser etwa auf Höhe des Zusammenhalteteils 22 und in Abstand vom überstehenden Endabschnitt 68 steht. Die Verschiebung in diese Endstellung ist ausreichend, um ein vollständiges Öffnen des Längsbandverschlusses 63 und vollständiges Abklappen der Deckeinrichtung 54 zu ermöglichen, damit das Abdeckelement 16 ungestört in die gezeigte Abdeckstellung auffächern kann.

Das Aufnahmeelement 28 kann als U-Profil ausgebildet sein. Des Weiteren besteht aber auch die Möglichkeit, das Aufnahmeelement 28 als einen im Querschnitt etwa rechteckförmigen dünnen und in Grenzen steifen Streifen auszubilden, der im Bereich seines linken und im Bereich seines rechten Längsrandes ein z. B. in sich flexibles Seitenteil aufweist. In vorteilhafter Weise werden diese beiden flexiblen Seitenteile vom Seitenteil 64 und vom Seitenteil 65 des Längsbandverschlusses 63 gebildet.

Der Längsbandverschluss 63 ist in einer Variante mit seinem Endabschnitt 68 am Aufnahmeelement 28 oder an einem mit dem Aufnahmeelement 28 kraftübertragend verbundenen Teil, z. B. dem Zusammenhalteteil 22, festgelegt. Befindet sich der Längsbandverschluss 63 dabei im geschlossenen Zustand, in welchem der bewegliche Teil 31 sich am Ende 67 des Aufnahmeelements 28 befindet, verläuft der Längsbandverschluss 63, z. B. Reißverschluss, in Seitenansicht gesehen im wesentlichen parallel zur Oberkante des Aufnahmeelements 28, wie dies teilweise aus Fig. 14 ersichtlich ist. In einer besonders vorteilhaften Ausführungsform verläuft der Längsbandverschluss 63 über einen kurzen Bereich, beginnend an einem Punkt nahe dem Endbereich 66 bis etwa hin zum Endbereich 66 des Aufnahmeelements 28, nicht mehr parallel zur Oberkante des Aufnahmeelements 28, sondern derart, dass der Längsbandverschluss 63 in Seitenansicht gesehen über diesen kurzen Bereich einen nach oben weisenden Buckel oder Bogen bildet. Auf diese Weise bildet der Längsbandverschluss 63 in diesem Bogenbereich eine Überlänge. Wird der Längsbandverschluss 63 vollständig geöffnet und das Abdeckelement 16 in Abdeckstellung gebracht, wird durch die Überlänge des Längsbandverschlusses 63, z. B. Reißverschlusses, gewährleistet, dass die beiden im Öffnungszustand voneinander getrennten Teile des Längsbandverschlusses 63 auch im Bereich nahe des Endbereichs 66 des Aufnahmeelements 28 so weit voneinander weg bewegt werden können, dass die Elementteile 17 des Abdeckelements 16 problemlos und ohne Gefahr einer Beschädigung in den entstehenden Zwischenraum hinein aufgefächert werden können.

Durch das Zusammenhalteteil 22 können die Elementteile 17 des Abdeckelements 16 im gemeinsamen Bereich21 zu einem Stapel geringstmöglicher Höhe zusammengepresst werden. Damit ist die Voraussetzung dafür geschaffen, dass das Abdeckelement 16 im Stapelzustand und über die gesamte Länge des Stapels 18 eine kleinstmögliche Stapelhöhe beansprucht.

Um das Abdeckelement 16 ausgehend von einer bestimmten Öffnung 11 vom Stapelzustand in den vollflächigen Abdeckzustand überführen zu können, ist eine bestimmte Mindestanzahl von Elementteilen 17 notwendig. In vorteilhafter Weise wird die Zahl der Elementteile 17 so festgelegt, dass diese größer ist als die Mindestanzahl der Elementteile 17. Damit verfügt das Abdeckelement 16 über einen Speicher an Elementteilen 17, der z. B. bei Temperaturschwankungen für den nötigen Längenausgleich sorgt.

In Fig. 24 weist die etwa vertikal verlaufende Endkante 81 des Endbereichs 70 des Abdeckteils 56 zum seitlichen Rand 13 der Öffnung 11. In einer vorteilhaften Ausführungsform wird das Abdeckteil 56 mit seinem Endbereich 70, insbesondere mit seiner Endkante 81, am Endbereich 66 des Aufnahmeelements 28 festgelegt. Desgleichen kann das Abdeckteil 56 auch an einem Teil fixiert werden, das kraftübertragend mit dem Endbereich 66 des Aufnahmeelements 28 verbunden ist. Dabei kann die Fixierung des Abdeckteils 56 über die gesamte Länge der Endkante 81 oder nur über einen Teil derselben am Aufnahmeelement 28 erfolgen. Diese Fixierung kann so erfolgen, dass die Endkante 81 in einer um etwa 90° abgeklappten Position in Bezug auf die Darstellung in Fig. 24 am Aufnahmeelement 28 oder z. B. am Zusammenhalteteil 22 festgelegt wird. Auf diese Weise wird gewährleistet, dass sich beim Verschieben des beweglichen Teils 31 in Fig. 24 von links nach rechts das Abdeckteil 56 absolut störungsfrei von einer etwa vertikalen in eine um etwa 90° geklappte Abdeckposition bewegen lässt.

## Patentansprüche

1. Verschlusseinrichtung für Fenster, Türen od. dgl. Öffnungen (11), mit mindestens einem Abdeckelement (16), das zickzackförmig verbundene, bewegliche, auf-und zufächerbare Elementteile (17) aufweist, die zu einem etwa flächigen Verschluss auffächerbar und zu einem Stapel (18) zufächerbar sind, wobei das mindestens eine Abdeckelement (16) hinsichtlich seiner möglichen Auffächerung und hinsichtlich seiner Randkontur, die sich im aufgefächerten Zustand der Elementteile (17) ergibt, an den jeweiligen Randverlauf der Öffnung (11) derart angepasst ist, dass die Öffnung (11) ganz oder teilweise abgedeckt ist, und das zwei im aufgefächerten Zustand unter einem Winkel zueinander verlaufende, eigenständige oder durch Ränder des Abdeckelements (16) gebildete Randteile (24, 25) aufweist, die in einem gemeinsamen Bereich (21) zumindest im wesentlichen zusammengeführt sind,
wobei das Abdeckelement (16) aus einem dauerhaft plissierten dünnwandigen Element gebildet ist und als durch kraftbetätigtes Auffächern und/oder Zufächern aufladbarer mechanischer Energiespeicher ausgebildet ist; **dadurch gekennzeichnet, dass**
der Stapel (18) mit den Elementteilen (17) im zugefächerten Zustand gegen die Wirkung einer in Auffächerrichtung (Pfeil 20) wirksamen Federkraft mittels eines Zuhaltemittels (23) zugehalten wird, das zum Freigeben des Stapels (18) in Auffächerrichtung (Pfeil 20) in eine Freigabestellung und zum Zufächern zum Stapel (18) in eine Schliessstellung bringbar ist,
das Zuhaltemittel (23) eine am Stapel (18) angreifende, in Längsrichtung der einzelnen Elementteile (17) bewegbare Niederhaltevorrichtung (27) aufweist, und
die Niederhaltevorrichtung (27) als Längsverschlusseinrichtung (29), z. B. als Reißverschluss, als Längsbandverschluss od. dgl., ausgebildet ist.

2. Verschlusseinrichtung nach Anspruch 1,
**dadurch gekennzeichnet,**
**dass** das Abdeckelement (16) ausgehend von einer Nichtenergiespeicherstellung durch kraftbetätigtes Zufächern oder Auffächern in eine Energiespeicherstellung überführbar ist.

3. Verschlusseinrichtung nach Anspruch 1 oder 2,
**dadurch gekennzeichnet,**
**dass** die einzelnen Elementteile (17) etwa ziehharmonikaartig gefaltet sind unter Bildung jeweiliger in Längsrichtung ihrer Längsränder sich erstreckender Knicke (19) und dass die Elementteile (17) zumindest im aufgefächerten Zustand im Bereich dieser Knicke (19) zumindest im wesentlichen biegesteif sind.

4. Verschlusseinrichtung nach Anspruch 3,
**dadurch gekennzeichnet,**
**dass** die Knicke (19) der Elementteile (17) selbstfedernd sind, derart, dass die Elementteile (17) bei kraftbetätigtem Zufächern oder Auffächern im Bereich der Knicke (19) federnd aufgeladen werden und bei Freigabe unter der Wirkung des federnden Rückstellvermögens selbsttätig auffächerbar bzw. zufächerbar sind.

5. Verschlusseinrichtung nach einem der Ansprüche 1 bis 4,
**dadurch gekennzeichnet,**
**dass** die einzelnen Elementteile (17) des Abdeckelements (16) entlang ihren Längsrändern bei Freigabe aus dem zugefächerten Zustand, insbesondere aus dem Stapel (18), sich selbsttätig auffächern und durch gegensinnige äußere Krafteinwirkung, insbesondere zum Stapel (18), zufächerbar sind.

6. Verschlusseinrichtung nach einem der Ansprüche 3 bis 5,
**dadurch gekennzeichnet,**
**dass** die Knicke (19) in der Nichtenergiespeicherstellung des Abdeckelements (16) im Querschnitt gesehen etwa V-förmig sind.

7. Verschlusseinrichtung nach einem der Ansprüche 3 bis 6,
**dadurch gekennzeichnet,**
**dass** die Knicke (19) in der zugefächerten Energiespeicherstellung des Abdeckelements (16) etwa konvex nach außen gekrümmte V-Schenkel aufweisen.

8. Verschlusseinrichtung nach einem der Ansprüche 3 bis 7,
**dadurch gekennzeichnet,**
**dass** die Knicke (19) in einer kraftbetätigten, über das selbsttätige Auffächern hinausgehenden aufgefächerten Energiespeicherstellung des Abdeckelements (16) im Querschnitt gesehen V-förmig mit an jeden V-Schenkel anschließender Schwinge geformt sind.

9. Verschlusseinrichtung nach einem der Ansprüche 1 bis 8,
**dadurch gekennzeichnet,**
**dass** die Elementteile (17) des Abdeckelements (16) im gemeinsamen Bereich (21) derart beweglich verbunden sind, dass ein Randteil (25) zumindest sowohl um eine rechtwinklig zur Aufspannebene des Abdeckelements (16) verlaufende Achse als auch um eine in der Aufspannebene oder parallel zu dieser verlaufende Achse schwenkbar ist.

10. Verschlusseinrichtung nach einem der Ansprüche 1 bis 9,
**dadurch gekennzeichnet,**
**dass** die Elementteile (17) im gemeinsamen Bereich (21) zusammengehalten sind und in Richtung ihrer Längsränder in Abstand davon auffächerbar bzw. gegensinnig zufächerbar sind.

11. Verschlusseinrichtung nach Anspruch 10,
**dadurch gekennzeichnet,**
**dass** die Zusammenhaltung der Elementteile (17) im gemeinsamen Bereich (21) mittels eines Zusammenhalteteils (22) erfolgt.

12. Verschlusseinrichtung nach Anspruch 11,
**dadurch gekennzeichnet,**
**dass** das Zusammenhalteteil (22) in Seitenansicht und im zugefächerten Stapelzustand des Abdeckelements (16) etwa U-Form aufweist.

13. Verschlusseinrichtung nach Anspruch 1,
**dadurch gekennzeichnet,**
**dass** das Zuhaltemittel (23) den Stapel (18) an einer Stelle oder entlang dessen Längsrichtung umgibt und zusammenhält.

14. Verschlusseinrichtung nach einem der Ansprüche 1 bis 13,
**gekennzeichnet durch**
ein den Stapel (18), soweit dieser zugefächert ist, aufnehmendes und in diesem Zustand zusammenhaltendes Aufnahmeelement (28), das an einem Rand (12, 14, 13) der Öffnung (11) halterbar ist.

15. Verschlusseinrichtung nach Anspruch 1 oder 14,
**dadurch gekennzeichnet,**
**dass** das Aufnahmeelement (28) die Längsverschlusseinrichtung (29) aufweist, mittels der das Aufnahmeelement (28) in einen den Stapel (18), soweit dieser zugefächert ist, zusammenhaltenden Schließzustand oder den Stapel (18) zur Auffächerung freigebenden Öffnungszustand bringbar ist.

16. Verschlusseinrichtung nach Anspruch 14 oder 15,
**dadurch gekennzeichnet,**
**dass** das Aufnahmeelement (28) als hohles Längsprofil ausgebildet ist.

17. Verschlusseinrichtung nach einem der Ansprüche 14 bis 16,
**dadurch gekennzeichnet,**
**dass** das Aufnahmeelement (28), insbesondere Längsprofil, flexibel ist.

18. Verschlusseinrichtung nach einem der Ansprüche 14 bis 17,
**dadurch gekennzeichnet,**
**dass** das Aufnahmeelement (28), insbesondere Längsprofil, schlauchförmig ist.

19. Verschlusseinrichtung nach einem der Ansprüche 1 bis 18,
**dadurch gekennzeichnet,**
**dass** die mindestens eine Längsverschlusseinrichtung (29) auf der Oberseite des Aufnahmeelements (28) oder an einer Seite oder an beiden Seiten dieses angeordnet ist.

20. Verschlusseinrichtung nach einem der Ansprüche 1 bis 19,
**dadurch gekennzeichnet,**
**dass** die mindestens eine Längsverschlusseinrichtung (29) fester Bestandteil, vorzugsweise einstückiger Bestandteil, des Aufnahmeelements (28) ist.

21. Verschlusseinrichtung nach einem der Ansprüche 1 bis 20,
**dadurch gekennzeichnet,**
**dass** die mindestens eine Längsverschlusseinrichtung (29) über das Ende des Aufnahmeelements (28), das dem gemeinsamen Bereich (21) der Elementteile (17) zugeordnet ist, hinaus reicht.

22. Verschlusseinrichtung nach einem der Ansprüche 1 bis 21,
**dadurch gekennzeichnet,**
**dass** die Niederhaltevorrichtung (27) durch das Aufnahmeelement (28) oder zumindest einen Teil dieses gebildet ist.

23. Verschlusseinrichtung nach einem der Ansprüche 1 bis 22,
**dadurch gekennzeichnet,**
**dass** die Niederhaltevorrichtung (27) ein Niederhalteelement (30) aufweist, das am beweglichen Teil (31) der Längsverschlusseinrichtung (29), z. B. am Schieber eines Reißverschlusses, angeordnet ist, mit diesem bewegbar ist und das Abdeckelement (16) in seinem Wirkungsbereich zu einem Stapel (18) zusammendrückt bzw. zur Auffächerung freigibt.

24. Verschlusseinrichtung nach Anspruch 23,
**dadurch gekennzeichnet,**
**dass** das Niederhalteelement (30) aus einem Gleitkörper (32) oder Rollkörper (42), z. B. einer Walze, gebildet ist.

25. Verschlusseinrichtung nach Anspruch 23 oder 24,
**dadurch gekennzeichnet,**
**dass** das Niederhalteelement (30) sich mindestens über die Breite der Elementteile (17) erstreckt, vorzugsweise beidseitig über die Elementteile (17) hinaus reicht.

26. Verschlusseinrichtung nach einem der Ansprüche 1 bis 25,
**dadurch gekennzeichnet,**
**dass** ein Randteil (25) an dem einen freien, beim Auffächern mit auffächerbaren Rand des Abdeckelements (16) vorgesehen ist.

27. Verschlusseinrichtung nach Anspruch 26,
**dadurch gekennzeichnet,**
**dass** der eine Randteil (25) zum völligen Auffächern des Abdeckelements (16) manuell oder motorisch betätigbar ist.

28. Verschlusseinrichtung nach Anspruch 26 oder 27,
**dadurch gekennzeichnet,**
**dass** der eine Randteil (25) mittels mindestens eines Befestigungselements (37), z. B. Klettverschlusses, am zugeordneten Rand (13, 12) der Öffnung (11) festlegbar ist.

29. Verschlusseinrichtung nach Anspruch 26 oder 28,
**dadurch gekennzeichnet,**
**dass** der eine Randteil (25) quer zur Auffächerebene des Abdeckelements (16) gesehen biegesteif ist.

30. Verschlusseinrichtung nach einem der Ansprüche 26 bis 29,
**dadurch gekennzeichnet,**
**dass** der eine Randteil (25) innerhalb der Auffächerebene des Abdeckelements (16) gesehen zumindest in einer Biegerichtung nachgiebig ist.

31. Verschlusseinrichtung nach einem der Ansprüche 1 bis 30,
**dadurch gekennzeichnet,**
**dass** der andere Randteil (24) durch das Aufnahmeelement (28) oder einen Teil, z. B. einen Elementstreifen (35), dieses gebildet ist und mittels eines Befestigungselements (36), z. B. Klettverschlusses, insbesondere Klettverschlussstreifens, am zugeordneten Rand (12, 14, 13) der Öffnung (11) festlegbar ist.

32. Verschlusseinrichtung nach einem der Ansprüche 23 bis 31,
**dadurch gekennzeichnet,**
**dass** das Niederhalteelement (30) in Form eines Rollkörpers (42), insbesondere einer Walze, längs des Aufnahmeelements (28) beweglich und geführt ist.

33. Verschlusseinrichtung nach Anspruch 32,
**dadurch gekennzeichnet,**
**dass** an dem Rollkörper (42), insbesondere der Walze, ein Band (50) angreift, das auf eine Aufwickelrolle (51), z. B. Federrolle oder motorisch betätigbare Rolle, aufwickelbar bzw. davon abgebbar ist.

34. Verschlusseinrichtung nach Anspruch 33,
**dadurch gekennzeichnet,**
**dass** das Band (50) in Längsrichtung gesehen biegesteif und schubkraftübertragend ausgebildet ist und auf dem Bereich zwischen der Aufwickelrolle (51) und dem Rollkörper (42), insbesondere der Walze, geführt ist.

35. Verschlusseinrichtung nach einem der Ansprüche 32 bis 34,
**dadurch gekennzeichnet,**
**dass** der Rollkörper (42), insbesondere die Walze, mittels einer Antriebseinrichtung längs des Aufnahmeelements (28) zumindest in einer Richtung unter Zufächerung des Abdeckelements (16) kraftbetätigbar ist.

36. Verschlusseinrichtung nach einem der Ansprüche 1 bis 35,
**dadurch gekennzeichnet,**
**dass** das Abdeckelement (16) aus einem Kunststoffteil, insbesondere einer Kunststofffolie, gebildet ist.

37. Verschlusseinrichtung nach Anspruch 36,
**dadurch gekennzeichnet,**
**dass** die einzelnen Elementteile (17) und Knicke (19) einstückige Bestandteile des Kunststoffteiles, insbesondere der Kunststofffolie, sind.

38. Verschlusseinrichtung, nach einem oder mehreren der vorhergehenden Ansprüche,
**dadurch gekennzeichnet,**
**dass** der Längsverschlusseinrichtung (29) eine Deckeinrichtung (54) zugeordnet ist, die beim Schließen der Längsverschlusseinrichtung (29) mittels dieser von zumindest einer Seite und im wesentlichen von oben auf jeweilige zuzufächernde Bereiche des Stapels (18) mit in Längsrichtung fortschreitender, zumindest teilweiser Überdeckung dieses bewegbar ist und beim gegensinnigen Öffnen der Längsverschlusseinrichtung (29) von dieser fortschreitend freigegeben wird unter entsprechender Freigabe des Stapels (18).

39. Verschlusseinrichtung nach Anspruch 38,
**dadurch gekennzeichnet,**
**dass** die Deckeinrichtung (54) zumindest ein Abdeckteil (56) aufweist.

40. Verschlusseinrichtung nach Anspruch 38,
**dadurch gekennzeichnet,**
**dass** die Deckeinrichtung (54) zumindest ein Abdeckteil (56) und ein dem Abdeckteil (56) zugeordnetes Befestigungsteil (55) aufweist, mittels dessen das Abdeckteil (56) an einem Aufnahmeelement (28) für den Stapel (18) angeordnet ist.

41. Verschlusseinrichtung nach Anspruch 40,
**dadurch gekennzeichnet,**
**dass** das Befestigungsteil (55) als seitliches Wandteil und das Abdeckteil (56) als ein daran anschließendes Oberteil ausgebildet ist.

42. Verschlusseinrichtung nach einem der Ansprüche 38 bis 41,
**dadurch gekennzeichnet,**
**dass** die Deckeinrichtung (54) sich über einen wesentlichen Teil der Stapellänge erstreckt, insbesondere zumindest über die Länge des Stapels (18), auf der zusammengefaltete Enden der Elementteile (17) vorliegen.

43. Verschlusseinrichtung nach einem der Ansprüche 39 bis 42,
**dadurch gekennzeichnet,**
**dass** das Abdeckteil (56) der Deckeinrichtung (54) im Bereich seiner freien Längskante (57) in Längsrichtung zumindest in Grenzen biegesteif ist.

44. Verschlusseinrichtung nach einem der Ansprüche 39 bis 43,
**dadurch gekennzeichnet,**
**dass** das Abdeckteil (56) auf seiner Innenseite (59) und/oder Außenseite (60) und/oder Längskante (57) zumindest im Bereich seines freien Längsrandes (58) eine glatte Oberfläche aufweist.

45. Verschlusseinrichtung nach einem der Ansprüche 38 bis 44,
**dadurch gekennzeichnet,**
**dass** das Abdeckteil (56) im Bereich seines freien Längsrandes (58) ein Zusatzteil aufweist, das sich zumindest über einen wesentlichen Längenabschnitt des Längsrandes (58) erstreckt.

46. Verschlusseinrichtung nach Anspruch 45,
**dadurch gekennzeichnet,**
**dass** das Zusatzteil im Bereich der Längskante (57) des freien Längsrandes (58) angreift.

47. Verschlusseinrichtung nach Anspruch 45 oder 46,
**dadurch gekennzeichnet,**
**dass** das Zusatzteil als Folie ausgebildet ist, welche die Längskante (57) zumindest teilweise umgreift.

48. Verschlusseinrichtung nach einem der Ansprüche 45 bis 47,
**dadurch gekennzeichnet,**
**dass** das Zusatzteil als Streifenelement ausgebildet ist, welches den Längsrand (58) des Abdeckteils (56) bildet.

49. Verschlusseinrichtung nach einem der Ansprüche 38 bis 48,
**dadurch gekennzeichnet,**
**dass** die Deckeinrichtung (54) aus zumindest einem zumindest in Grenzen flexiblen Flächenstreifen (61) gebildet ist.

50. Verschlusseinrichtung nach einem der Ansprüche 38 bis 49,
**dadurch gekennzeichnet,**
**dass** die Deckeinrichtung (54) im Inneren (62) eines Aufnahmeelements (28) für den Stapel (18) angeordnet ist oder Teil des Aufnahmeelements (28) selbst ist.

51. Verschlusseinrichtung nach einem der Ansprüche 1 bis 50,
**dadurch gekennzeichnet,**
**dass** die Längsverschlusseinrichtung (29) einen Längsbandverschluss (63), z. B. einen Reißverschluss, aufweist.

52. Verschlusseinrichtung nach einem der Ansprüche 39 bis 41,
**dadurch gekennzeichnet,**
**dass** das Abdeckteil (56) im Bereich seines freien Längsrandes (58) eine Querschnittsdicke aufweist, die grösser ist als der zwischen Unterbrechungen am Längsbandverschluss (63), insbesondere zwischen Zähnen des Reißverschlusses, gemessene Abstand.

53. Verschlusseinrichtung nach einem der Ansprüche 1 bis 52,
**dadurch gekennzeichnet,**
**dass** das Aufnahmeelement (28) die Längsverschlusseinrichtung (29) aufweist.

54. Verschlusseinrichtung nach einem der Ansprüche 1 bis 53,
**dadurch gekennzeichnet,**
**dass** das Aufnahmeelement (28) als einen Randteil (24) bildendes Profil, z. B. als U-Profil, ausgebildet ist.

55. Verschlusseinrichtung nach einem der Ansprüche 1 bis 54,
**dadurch gekennzeichnet,**
**dass** die Längsverschlusseinrichtung (29) Seitenteile (64,65), die vorzugsweise flexibel sind, aufweist und mittels der Seitenteile (64,65) am Aufnahmeelement (28), z. B. am Profil, angreift oder dass die Seitenteile (64,65) mit dem Aufnahmeelement (28) einstückig sind.

56. Verschlusseinrichtung nach Anspruch 55,
**dadurch gekennzeichnet,**
**dass** die Seitenteile (64, 65) der Längsverschlusseinrichtung (29) das Aufnahmeelement (28), z. B. Profil, außen überdecken.

57. Verschlusseinrichtung nach einem der Ansprüche 1 bis 56,
**dadurch gekennzeichnet,**
**dass** das Aufnahmeelement (28), insbesondere das Profil, über die Länge des Stapels (18) gesehen, eine gleichförmige Höhe aufweist oder auf dem dem gemeinsamen Bereich (21) der Elementteile (17) zugeordneten Endbereich (66) eine größere Höhe als am gegenüberliegenden Ende (67) aufweist.

58. Verschlusseinrichtung nach einem der Ansprüche 38 bis 57,
**dadurch gekennzeichnet,**
**dass** bei geschlossener Längsverschlusseinrichtung (29) deren Schließlinie ausmittig mit geringerem Querabstand von einer Seite als von der anderen Seite des Aufnahmeelements (28) verläuft.

59. Verschlusseinrichtung nach einem der Ansprüche 38 bis 58,
**dadurch gekennzeichnet,**
**dass** bei geschlossener Längsverschlusseinrichtung (29) der Abstand der Schließlinie von der Seite des Aufnahmeelements (28), welcher das Abdeckteil (56) zugeordnet ist, kleiner ist als von der anderen Seite des Aufnahmeelements (28).

60. Verschlusseinrichtung nach einem der Ansprüche 38 bis 59,
**dadurch gekennzeichnet,**
**dass** zumindest die beiden Enden der Längsverschlusseinrichtung (29), insbesondere des Längsbandverschlusses (63), zumindest innerhalb der Aufspannebene des Abdeckelements (16) im wesentlichen unbeweglich festgelegt sind.

61. Verschlusseinrichtung nach einem der Ansprüche 38 bis 60,
**dadurch gekennzeichnet,**
**dass** die Längsverschlusseinrichtung (29), insbesondere der Längsbandverschluss (63), vom geschlossenen Zustand ausgehend in Öffnungsrichtung zumindest über einen Teilbereich eines Endabschnitts quer zur Aufspannebene des Abdeckelements (16) beweglich ist.

62. Verschlusseinrichtung nach einem der Ansprüche 38 bis 61,
**dadurch gekennzeichnet,**
**dass** die Längsverschlusseinrichtung (29), insbesondere der Längsbandverschluss (63), in gestreckter Ausrichtung eine größere Länge als das Aufnahmeelement (28) aufweist.

63. Verschlusseinrichtung nach einem der Ansprüche 51 bis 62,
**dadurch gekennzeichnet,**
**dass** die Längsverschlusseinrichtung (29), insbesondere der Längsbandverschluss (63), einen über den gemeinsamen Bereich (21) der Elementteile (17) hinausragenden Endabschnitt (68) aufweist, der am dortigen Endbereich am zugeordneten Rahmenteil des Öffnungsrandes (13) oder am Aufnahmeelement (28) festlegbar ist.

64. Verschlusseinrichtung nach einem der Ansprüche 39 bis 63,
**dadurch gekennzeichnet,**
**dass** das Abdeckteil (56) der Deckeinrichtung (54) an dem Endbereich (70), der dem gemeinsamen Bereich (21) der Elementteile (17) zugeordnet ist, in Schließrichtung der Längsverschlusseinrichtung (29) gesehen ansteigend abgeschrägt ist.

65. Verschlusseinrichtung nach einem der Ansprüche 1 bis 64,
**dadurch gekennzeichnet,**
**dass** das Zusammenhalteteil (22) in der Aufspannebene des Abdeckelements (16) und um eine etwa rechtwinklig zur Aufspannebene verlaufende Achse in Grenzen schwenkbeweglich ist.

66. Verschlusseinrichtung nach einem der Ansprüche 1 bis 65,
**dadurch gekennzeichnet,**
**dass** das Zusammenhalteteil (22) relativ zum Aufnahmeelement (28) unbeweglich ist.

67. Verschlusseinrichtung nach einem der Ansprüche 1 bis 66,
**dadurch gekennzeichnet,**
**dass** das Zusammenhalteteil (22) am Aufnahmeelement (28), zumindest an dessen Basis (76), angeordnet ist.

68. Verschlusseinrichtung nach einem der Ansprüche 1 bis 67,
**dadurch gekennzeichnet,**
**dass** der in oberem Abstand von der Basis (76) des Aufnahmeelements (28) angeordnete Teil (77) des Zusammenhalteteils (22) eine Länge aufweist, die gleich oder grösser als die Länge des beweglichen Teils (31) der Längsverschlusseinrichtung (29), insbesondere des Längsbandverschlusses (63), ist oder ein Mehrfaches dieser Länge beträgt.

69. Verschlußeinrichtung nach einem der Ansprüche 1 bis 68,
**dadurch gekennzeichnet,**
**dass** das Zusammenhalteteil (22) den Stapel (18) im gemeinsamen Bereich (21) der Elementteile (17) oberseitig und/oder unterseitig und/oder rückseitig und/oder zumindest auf einer Breitseite umfasst.

70. Verschlusseinrichtung nach einem der Ansprüche 1 bis 69,
**dadurch gekennzeichnet,**
**dass** das Zusammenhalteteil (22) als in sich steifes Element ausgebildet ist.

71. Verschlusseinrichtung nach einem der Ansprüche 1 bis 70,
**dadurch gekennzeichnet,**
**dass** die Elementteile (17) im gemeinsamen Bereich (21) mittels des Zusammenhalteteils (22) fest aufeinanderliegend zusammengespannt sind.

72. Verschlusseinrichtung nach einem der Ansprüche 1 bis 71,
**dadurch gekennzeichnet,**
**dass** das Abdeckelement (16) an dem beim Auffächern vorderen Randbereich (72) eine Handhabe (73) zum Anfassen beim Auffächern und/oder Zufächern aufweist.

73. Verschlusseinrichtung nach Anspruch 72,
**dadurch gekennzeichnet,**
**dass** die Handhabe (73) aus einem Elementteil (17) des Abdeckelements (16), z. B. aus dem letzten Elementteil (17) dieses, gebildet ist.

74. Verschlusseinrichtung nach Anspruch 72 oder 73,
**dadurch gekennzeichnet,**
**dass** der die Handhabe (73) bildende Elementteil (17) als abklappbarer Streifen des Abdeckelements (16) ausgebildet ist.

75. Verschlusseinrichtung nach einem der Ansprüche 72 bis 74,
**dadurch gekennzeichnet,**
**dass** das auf die Handhabe (73), insbesondere den Streifen, in Zufächerrichtung nächstfolgende Elementteil (17) auf dem dortigen Endbereich ein Befestigungsmittel (75), z. B. ein Klettverschlussteil, zum lösbaren Befestigen am zugeordneten Rahmenteil des Öffnungsrandes (13) aufweist.

76. Verschlusseinrichtung nach einem der Ansprüche 55 bis 75,
**dadurch gekennzeichnet,**
**dass** die Handhabe (73), insbesondere der Streifen, in der zusammengefächerten Freigabestellung des Abdeckelements (16) das Befestigungsmittel (75) teilweise oder vollständig überdeckt.

77. Verschlusseinrichtung nach Anspruch 75 oder 76,
**dadurch gekennzeichnet,**
**dass** das Befestigungsmittel (75) unsymmetrisch auf der Breitseite des Elementteils (17) angeordnet ist mit geringerem Abstand von einem Knick (19) einer Breitseite als von einem Knick (19) der gegenüberliegenden Breitseite des Abdeckelements (16).

78. Verschlusseinrichtung nach einem der Ansprüche 72 bis 77,
**dadurch gekennzeichnet,**
**dass** der die Handhabe (73) bildende Elementteil (17), insbesondere Streifen, mit einem Ende (78) in Abstand von dem gemeinsamen Bereich (21) der Elementteile (17) endet.

79. Verschlusseinrichtung nach einem der Ansprüche 38 bis 78,
**dadurch gekennzeichnet,**
**dass** das Abdeckteil (56) am Endbereich (70), insbesondere im Bereich seiner Endkante (81), am Aufnahmeelement (28) oder an einem Teil, der kraftübertragend mit dem Aufnahmeelement (28) verbunden ist, festgelegt ist.

80. Verschlusseinrichtung nach Anspruch 79,
**dadurch gekennzeichnet,**
**dass** die festgelegte Endkante (81) des Abdeckteils (56) mit der Aufspannebene des Abdeckelements (16) einen Winkel bildet, insbesondere etwa einen Winkel von 90 einschließt.

81. Verschlusseinrichtung nach einem der Ansprüche 38 bis 78,
**dadurch gekennzeichnet,**
**dass** der am Aufnahmeelement (28) angeordnete Längsbandverschluss (63) im geschlossenen Zustand am oder nahe dem Endbereich (66) des Aufnahmeelements (28) eine Überlänge aufweist.

## Claims

1. Closing device for windows, doors or such openings (11), comprising at least one covering element (16), which has movable, fannable and foldable element parts (17), connected in a zigzag shape, the said element parts being able to be fanned out into an approximately planar closure and folded into a stack (18), wherein the at least one covering element (16), in terms of its possible fanning and in terms of its marginal contour produced in the fanned state of the element parts (17), is tailored to the respective marginal course of the opening (11) in such a way that the opening (11) is wholly or partially covered, and which has two marginal parts (24, 25), which are independent or are formed by margins of the covering element (16) and in the fanned state run at an angle to each other and which in a common region (21) are at least substantially merged,
wherein the covering element (16) is formed of a permanently pleated, thin-walled element and is configured as a mechanical energy store chargeable by poweroperated fanning and/or folding;
**characterized in that**
the stack (18) containing the element parts (17) in the folded state is secured against the action of a spring force acting in the fanning direction (arrow 20) by means of a locking means (23), which, for the release of the stack (18) in the fanning direction (arrow 20), can be brought into a release position, and for the folding into a stack (18), into a closing position,
the retention means (23) has a hold-down apparatus (27), which acts on the stack (18) and is movable in the longitudinal direction of the individual element parts (17), and the hold-down apparatus (27) is configured as a longitudinal closing device (29), for example as a zip fastener, as a longitudinal band closure or the like.

2. Closing device according to Claim 1,
**characterized**
**in that** the covering element (16), starting from a non-energy-storing position, is transferable by power-operated folding or fanning into an energy-storing position.

3. Closing device according to Claim 1 or 2,
**characterized**
**in that** the individual element parts (17) are folded approximately in a concertina-like manner, with the formation of respective creases (19) extending in the longitudinal direction of their longitudinal margins, and in that the element parts (17), at least in the fanned state, are at least substantially flexurally rigid in the region of these creases (19).

4. Closing device according to Claim 3,
**characterized**
**in that** the creases (19) of the element parts (17) are self-resilient, such that the element parts (17), upon power-operated folding or fanning, are spring-loaded in the region of the creases (19) and, upon release, are automatically fannable or foldable under the action of the resilient restoring capability.

5. Closing device according to one of Claims 1 to 4,
**characterized**
**in that** the individual element parts (17) of the covering element (16) automatically fan out along their longitudinal margins upon release from the folded state, in particular out of the stack (18), and are foldable by counterdirectional external force influence, in particular into the stack (18).

6. Closing device according to one of Claims 3 to 5,
**characterized in that** the creases (19), in the non-energy-storing position of the covering element (16), viewed in cross section, are approximately V-shaped.

7. Closing device according to one of Claims 3 to 6,
**characterized**
**in that** the creases (19), in the folded energy-storing position of the covering element (16), have V-members which are curved approximately convexly outwards.

8. Closing device according to one of Claims 3 to 7,
**characterized**
**in that** the creases (19), in a power-operated, fanned energy-storing position of the covering element (16), which position transcends the automatic fanning, are formed, viewed in cross section, in a V-shape, with a motion link connecting to each V-member.

9. Closing device according to one of Claims 1 to 8,
**characterized**
**in that** the element parts (17) of the covering element (16) are movably connected in the common region (21) such that a marginal part (25) is pivotable at least both about an axis running at right angles to the spanning plane of the covering element (16) and about an axis running in the spanning plane or parallel thereto.

10. Closing device according to one of Claims 1 to 9,
**characterized**
**in that** the element parts (17) are held together in the common region (21) and are fannable in the direction of the longitudinal margins at a distance therefrom or are foldable in the opposite direction.

11. Closing device according to Claim 10,
**characterized**
**in that** the element parts (17) are held together in the common region (21) by means of a hold-together part (22).

12. Closing device according to Claim 11,
**characterized**
**in that** the hold-together part (22) in side view, and in the folded stacking state of the covering element (16), has an approximately U-shape.

13. Closing device according to Claim 1,
**characterized**
**in that** the retention means (23) surrounds and holds together the stack (18) at one place or along the longitudinal direction thereof.

14. Closing device according to one of Claims 1 to 13,
**characterized by**
a receiving element (28), which, insofar as the stack (18) is folded, receives this same and holds it together in this state, which receiving element is mountable on a margin (12, 14, 13) of the opening (11).

15. Closing device according to Claim 1 or 14,
**characterized**
**in that** the receiving element (28) has the longitudinal closing device (29), by means of which the receiving element (28) can be brought into a closing state which holds together the stack (18), insofar as this is folded, or an opening state which releases the stack (18) for fanning.

16. Closing device according to Claim 14 or 15,
**characterized**
**in that** the receiving element (28) is configured as a hollow longitudinal profile.

17. Closing device according to one of Claims 14 to 16,
**characterized**
**in that** the receiving element (28), in particular the longitudinal profile, is flexible.

18. Closing device according to one of Claims 14 to 17,
**characterized**
**in that** the receiving element (28), in particular the longitudinal profile, is tubular.

19. Closing device according to one of Claims 1 to 18,
**characterized**
**in that** the at least one longitudinal closing device (29) is disposed on the top side of the receiving element (28), or on one side or on both sides thereof.

20. Closing device according to one of Claims 1 to 19,
**characterized**
**in that** the at least one longitudinal closing device (29) is a fixed component, preferably an integral component, of the receiving element (28).

21. Closing device according to one of Claims 1 to 20,
**characterized**
**in that** the at least one longitudinal closing device (29) reaches beyond that end of the receiving element (28) which is assigned to the common region (21) of the element parts (17).

22. Closing device according to one of Claims 1 to 21,
**characterized**
**in that** the hold-down apparatus (27) is formed by the receiving element (28), or at least a part thereof.

23. Closing device according to one of Claims 1 to 22,
**characterized**
**in that** the hold-down apparatus (27) has a hold-down element (30), which is disposed on the movable part (31) of the longitudinal closing device (29), for example on the slide of a zip fastener, is movable with this same, and compresses the covering element (16) in its active region into a stack (18) or releases it for fanning.

24. Closing device according to Claim 23,
**characterized**
**in that** the hold-down element (30) is formed of a sliding body (32) or rolling body (42), for example a roll.

25. Closing device according to Claim 23 or 24,
**characterized**
**in that** the hold-down element (30) extends at least over the width of the element parts (17), preferably on both sides beyond the element parts (17).

26. Closing device according to one of Claims 1 to 25,
**characterized**
**in that** a marginal part (25) is provided on the one, free margin of the covering element (16) which is jointly fannable in the fanning operation.

27. Closing device according to Claim 26,
**characterized**
**in that** one marginal part (25) is operable by manual or motorized means for the full fanning of the covering element (16).

28. Closing device according to Claim 26 or 27,
**characterized**
**in that** one marginal part (25) is fixable by means of at least one fastening element (37), for example a Velcro fastener, on the associated margin (13, 12) of the opening (11).

29. Closing device according to Claim 26 or 28,
**characterized**
**in that** one marginal part (25), viewed transversely to the fanning plane of the covering element (16), is flexurally rigid.

30. Closing device according to one of Claims 26 to 29,
**characterized**
**in that** one marginal part (25), viewed within the fanning plane of the covering element (16), is pliable at least in one bending direction.

31. Closing device according to one of Claims 1 to 30,
**characterized**
**in that** the other marginal part (24) is formed by the receiving element (28) or a part, for example an element strip (35), thereof, and is fixable by means of a fastening element (36), for example a Velcro fastener, in particular a Velcro strip, to the associated margin (12, 14, 13) of the opening (11).

32. Closing device according to one of Claims 23 to 31,
**characterized**
**in that** the hold-down element (30) in the form of a rolling body (42), in particular a roll, is movable and guided along the receiving element (28).

33. Closing device according to Claim 32,
**characterized**
**in that** the rolling body (42), in particular the roll, is engaged by a belt (50), which can be wound up onto a take-up roller (51), for example a spring roller or motorized roller, or can be paid off therefrom.

34. Closing device according to Claim 33,
**characterized**
**in that** the belt (50), viewed in the longitudinal direction, is of flexurally rigid and shearing-force-transmitting configuration and is guided on the region between the take-up roller (51) and the rolling body (42), in particular the roll.

35. Closing device according to one of Claims 32 to 34,
**characterized**
**in that** the rolling body (42), in particular the roll, can be power-driven by means of a drive device along the receiving element (28), at least in one direction, with folding of the covering element (16).

36. Closing device according to one of Claims 1 to 35,
**characterized**
**in that** the covering element (16) is formed of a plastics part, in particular a plastics sheet.

37. Closing device according to Claim 36,
**characterized**
**in that** the individual element parts (17) and creases (19) are integral components of the plastics part, in particular the plastics sheet.

38. Closing device according to one or more of the preceding claims,
**characterized**
**in that** to the longitudinal closing device (29) is assigned a cover device (54), which, upon the closure of the longitudinal closing device (29), is movable by means of this same from at least one side and substantially from above onto those respective regions of the stack (18) which are to be folded, with longitudinally progressing, at least partial coverage of this stack, and, upon the counterdirectional opening of the longitudinal closing device (29), is progressively released therefrom, with corresponding release of the stack (18).

39. Closing device according to Claim 38,
**characterized**
**in that** the cover device (54) has at least one covering part (56).

40. Closing device according to Claim 38,
**characterized**
**in that** the cover device (54) has at least one covering part (56) and a fastening part (55) which is assigned to the covering part (56) and by means of which the covering part (56) is disposed on a receiving element (28) for the stack (18).

41. Closing device according to Claim 40,
**characterized**
**in that** the fastening part (55) is configured as a lateral wall part, and the covering part (56) as a thereto connecting top part.

42. Closing device according to one of Claims 38 to 41,
**characterized**
**in that** the cover device (54) extends over a substantial part of the stack length, in particular at least over that length of the stack (18) on which folded-together ends of the element parts (17) are present.

43. Closing device according to one of Claims 39 to 42,
**characterized**
**in that** the covering part (56) of the cover device (54), in the region of its free longitudinal edge (57), is at least within limits flexurally rigid in the longitudinal direction.

44. Closing device according to one of Claims 39 to 43,
**characterized**
**in that** the covering part (56), on its inner side (59) and/or outer side (60) and/or longitudinal edge (57), at least in the region of its free longitudinal margin (58), has a smooth surface.

45. Closing device according to one of Claims 38 to 44,
**characterized**
**in that** the covering part (56), in the region of its free longitudinal margin (58), has an add-on part, which extends at least over a substantial longitudinal portion of the longitudinal margin (58).

46. Closing device according to Claim 45,
**characterized**
**in that** the add-on part is attached in the region of the longitudinal edge (57) of the free longitudinal margin (58).

47. Closing device according to Claim 45 or 46,
**characterized**
**in that** the add-on part is configured as a sheet, which at least partially encompasses the longitudinal edge (57).

48. Closing device according to one of Claims 45 to 47,
**characterized**
**in that** the add-on part is configured as a strip element, which forms the longitudinal margin (58) of the covering part (56).

49. Closing device according to one of Claims 38 to 48,
**characterized**
**in that** the cover device (54) is formed of at least one, at least within limits, flexible surface strip (61).

50. Closing device according to one of Claims 38 to 49,
**characterized**
**in that** the cover device (54) is disposed in the inside (62) of a receiving element (28) for the stack (18) or is itself part of the receiving element (28).

51. Closing device according to one of Claims 1 to 50,
**characterized**
**in that** the longitudinal closing device (29) has a longitudinal band closure (63), for example a zip fastener.

52. Closing device according to one of Claims 39 to 41,
**characterized**
**in that** the covering part (56), in the region of its free longitudinal margin (58) has a cross-sectional thickness which is greater than the distance measured between interruptions on the longitudinal band closure (63), in particular between teeth of the zip fastener.

53. Closing device according to one of Claims 1 to 52,
**characterized**
**in that** the receiving element (28) has the longitudinal closing device (29).

54. Closing device according to one of Claims 1 to 53,
**characterized**
**in that** the receiving element (28) is configured as a profile forming a marginal part (24), for example as a U-profile.

55. Closing device according to one of Claims 1 to 54,
**characterized**
**in that** the longitudinal closing device (29) has side parts (64, 65), which preferably are flexible, and acts by means of the side parts (64, 65) on the receiving element (28), for example on the profile, or in that the side parts (64, 65) are integral with the receiving element (28).

56. Closing device according to Claim 55,
**characterized**
**in that** the side parts (64, 65) of the longitudinal closing device (29) cover the receiving element (28), for example profile, on the outside.

57. Closing device according to one of Claims 1 to 56,
**characterized**
**in that** the receiving element (28), in particular the profile, viewed over the length of the stack (18), has a uniform height or, on the end region (66) assigned to the common region (21) of the element parts (17), has a greater height than at the opposite end (67).

58. Closing device according to one of Claims 38 to 57,
**characterized**
**in that**, when the longitudinal closing device (29) is closed, its closing line runs eccentrically at lesser transverse distance from one side than from the other side of the receiving element (28).

59. Closing device according to one of Claims 38 to 58,
**characterized**
**in that**, when the longitudinal closing device (29) is closed, the distance of the closing line from that side of the receiving element (28) to which the covering part (56) is assigned is smaller than from the other side of the receiving element (28).

60. Closing device according to one of Claims 38 to 59,
**characterized**
**in that** at least the two ends of the longitudinal closing device (29), in particular of the longitudinal band closure (63), at least within the spanning plane of the covering element (16), are fixed substantially immovably.

61. Closing device according to one of Claims 38 to 60,
**characterized**
**in that** the longitudinal closing device (29), in particular the longitudinal band closure (63), starting from the closed state, is movable in the opening direction, at least over a section of an end portion, transversely to the spanning plane of the covering element (16).

62. Closing device according to one of Claims 38 to 61,
**characterized**
**in that** the longitudinal closing device (29), in particular the longitudinal band closure (63), in stretched orientation, has a greater length than the receiving element (28).

63. Closing device according to one of Claims 51 to 62,
**characterized**
**in that** the longitudinal closing device (29), in particular the longitudinal band closure (63), has an end portion (68) which projects beyond the common region (21) of the element parts (17) and which, at the there situated end region, is fixable to the associated frame part of the opening margin (13) or to the receiving element (28).

64. Closing device according to one of Claims 39 to 63,
**characterized**
**in that** the covering part (56) of the cover device (54), at the end region (70) which is assigned to the common region (21) of the element parts (17), is increasingly bevelled viewed in the closing direction of the longitudinal closing device (29).

65. Closing device according to one of Claims 1 to 64,
**characterized**
**in that** the hold-together part (22) is, within limits, pivotably movable in the spanning plane of the covering element (16) and about an axis running approximately at right angles to the spanning plane.

66. Closing device according to one of Claims 1 to 65,
**characterized**
**in that** the hold-together part (22) is immovable relative to the receiving element (28).

67. Closing device according to one of Claims 1 to 66,
**characterized**
**in that** the hold-together part (22) is disposed on the receiving element (28), at least on the base (76) thereof.

68. Closing device according to one of Claims 1 to 67,
**characterized**
**in that** that part (77) of the hold-together part (22) which is disposed at an upper distance from the base (76) of the receiving element (28) has a length which is equal to or greater than the length of the movable part (31) of the longitudinal closing device (29), in particular of the longitudinal band closure (63), or amounts to a multiple of this length.

69. Closing device according to one of Claims 1 to 68,
**characterized**
**in that** the hold-together part (22) encompasses the stack (18) in the common region (21) of the element parts (17) on the top side and/or on the bottom side and/or on the rear side and/or at least on one broadside.

70. Closing device according to one of Claims 1 to 69,
**characterized**
**in that** the hold-together part (22) is configured as an inherently rigid element.

71. Closing device according to one of Claims 1 to 70,
**characterized**
**in that** the element parts (17) are clamped together in the common region (21) by means of the hold-together part (22) such that they sit tightly one upon the other.

72. Closing device according to one of Claims 1 to 71,
**characterized**
**in that** the covering element (16), on the, in the course of the fanning, front marginal region (72), has a handle (73) for grasping in the fanning and/or folding operation.

73. Closing device according to Claim 72,
**characterized**
**in that** the handle (73) is formed of an element part (17) of the covering element (16), for example of the last element part (17) thereof.

74. Closing device according to Claim 72 or 73,
**characterized**
**in that** the element part (17) forming the handle (73) is configured as a hinged strip of the covering element (16).

75. Closing device according to Claim 72 to 74,
**characterized**
**in that** the element part (17) which directly follows the handle (73), in particular the strip, in the folding direction has on the there situated end region a fastening means (75), for example a Velcro part, for releasable fastening to the associated frame part of the opening margin (13).

76. Closing device according to one of Claims 55 to 75,
**characterized**
**in that** the handle (73), in particular the strip, in the folded-together release position of the covering element (16), partially or completely covers the fastening means (75).

77. Closing device according to Claim 75 or 76,
**characterized**
**in that** the fastening means (75) is arranged asymmetrically on the broadside of the element part (17) at lesser distance from a crease (19) of one broadside than from a crease (19) of the opposite broadside of the covering element (16).

78. Closing device according to one of Claims 72 to 77,
**characterized**
**in that** the element part (17), in particular the strip, forming the handle (73) ends with one end (78) at a distance from the common region (21) of the element parts (17).

79. Closing device according to one of Claims 38 to 78,
**characterized**
**in that** the covering part (56) at the end region (70), in particular in the region of its end edge (81), is fixed to the receiving element (28) or to a part which is connected in a force-transmitting manner to the receiving element (28).

80. Closing device according to Claim 79,
**characterized**
**in that** the fixed end edge (81) of the covering part (56) forms an angle with the spanning plane of the covering element (16), in particular encloses approximately an angle of 90°.

81. Closing device according to one of Claims 38 to 78,
**characterized**
**in that** the longitudinal band closure (63) disposed on the receiving element (28) has in the closed state an excess length at or close to the end region (66) of the receiving element (28).

## Revendications

1. Dispositif de fermeture pour fenêtres, portes ou autres ouvertures (11) similaires, avec au moins un élément de recouvrement (16) comportant des parties d'élément (17) mobiles, reliées en forme de zigzag, pliables et dépliables à la façon d'un éventail, pouvant être ouvertes à la façon d'un éventail pour former une fermeture approximativement plane et pouvant être refermées à la façon d'un éventail pour former un empilement (18), l'au moins un élément de recouvrement (16) étant adapté de telle sorte, par rapport à sa possible ouverture à la façon d'un éventail et par rapport à son contour de bordure obtenu à l'état ouvert en éventail des parties d'élément (17), au niveau de la courbe de bordure respective de l'ouverture (11), que l'ouverture (11) est recouverte en totalité ou en partie et comporte deux parties de bordure (24, 25) autonomes s'étendant à l'état ouvert en éventail selon un certain angle l'une par rapport à l'autre ou formées par les bordures de l'élément de recouvrement (16) au moins pour l'essentiel guidées ensemble dans une région commune (21) ;
l'élément de recouvrement (16) étant formé d'un élément à paroi mince plissé de façon durable et prenant la forme d'un accumulateur d'énergie mécanique pouvant être chargé par l'ouverture et/ou la fermeture en éventail actionnées par force ;
**caractérisé en ce que** :
l'empilement (18) est maintenu fermé avec les parties d'élément (17) à l'état fermé de l'éventail contre l'effet d'une force de ressort s'exerçant dans la direction d'ouverture en éventail (flèche 20), à l'aide d'un moyen de maintien en position fermée (23) pouvant être amené dans une position de libération pour libérer l'empilement (18) dans la direction d'ouverture en éventail (flèche 20) et pouvant être amené dans une position de fermeture pour effectuer la fermeture à la façon d'un éventail jusqu'à redevenir l'empilement (18) ;
le moyen de maintien en position fermée (23) comporte un dispositif de maintien en position abaissée (27) s'agrippant au niveau de l'empilement (18), mobile dans la direction longitudinale des parties d'élément (17) individuelles ; et
le dispositif de maintien en position abaissée (27) est réalisé sous la forme d'un dispositif de fermeture longitudinale (29), par exemple d'une fermeture éclair, sous la forme d'une fermeture à bande longitudinale ou leur équivalent.

2. Dispositif de fermeture selon la revendication 1, **caractérisé en ce que** l'élément de recouvrement (16) peut être transféré dans une position d'accumulation d'énergie à partir d'une position de non-accumulation d'énergie par le biais de la fermeture ou de l'ouverture à la façon d'un éventail actionnée par force.

3. Dispositif de fermeture selon la revendication 1 ou 2, **caractérisé en ce que** les parties d'élément (17) individuelles sont pliées approximativement à la façon d'un accordéon en formant les plis (19) respectifs s'étendant dans la direction longitudinale de leurs bordures longitudinales et que les parties d'élément (17) peuvent être au moins pour l'essentiel rigides à la flexion au moins à l'état ouvert en éventail dans la région de ces plis (19).

4. Dispositif de fermeture selon la revendication 3, **caractérisé en ce que** les plis (19) des parties d'élément (17) sont auto-déformables, de telle sorte que les parties d'élément (17) sont chargées de façon élastique lors de la fermeture ou de l'ouverture à la façon d'un éventail actionnées par force dans la région des plis (19) et peuvent être ouvertes et/ou refermées à la façon d'un éventail lors de la libération sous l'effet de la capacité de rappel élastique.

5. Dispositif de fermeture selon l'une quelconque des revendications 1 à 4, **caractérisé en ce que** les parties d'élément (17) individuelles de l'élément de recouvrement (16) s'ouvrent automatiquement à la façon d'un éventail le long de leurs bordures longitudinales lors de la libération hors de l'état fermé de l'éventail, notamment hors de l'empilement (18), et peuvent être refermées en éventail par l'action d'une forme extérieure contraire, notamment pour revenir à l'empilement (18).

6. Dispositif de fermeture selon l'une quelconque des revendications 3 à 5, **caractérisé en ce que** les plis (19) sont en forme de V dans la position de non-accumulation d'énergie de l'élément de recouvrement (16), vu approximativement en section transversale.

7. Dispositif de fermeture selon l'une quelconque des revendications 3 à 6, **caractérisé en ce que** les plis (19) comportent des côtés en V coudés vers l'extérieur approximativement de façon convexe dans la position d'accumulation d'énergie, refermée à la façon d'un éventail, de l'élément de recouvrement (16).

8. Dispositif de fermeture selon l'une quelconque des revendications 3 à 7, **caractérisé en ce que** les plis (19) sont formés, dans une position d'accumulation d'énergie de l'élément de recouvrement (16) actionnée par une force, ouverte à la façon d'un éventail allant au-delà de l'ouverture automatique à la façon d'un éventail, en forme de V, vu en section transversale, avec l'aile connexe à chaque côté du V.

9. Dispositif de fermeture selon l'une quelconque des revendications 1 à 8, **caractérisé en ce que** les parties d'élément (17) de l'élément de recouvrement (16) sont reliées de telle sorte de façon mobile dans la région commune (21) qu'une partie de bordure (25) peut pivoter au moins tant autour d'un axe s'étendant à angle droit par rapport au plan de fixation de l'élément de recouvrement (16) qu'également autour d'un axe s'étendant dans le plan de fixation ou parallèlement à celui-ci.

10. Dispositif de fermeture selon l'une quelconque des revendications 1 à 9, **caractérisé en ce que** les parties d'élément (17) sont maintenues solidairement dans la région commune (21) et peuvent être ouvertes et/ou refermés en sens contraire à la façon d'un éventail en direction de leurs bordures longitudinales à distance de celles-ci.

11. Dispositif de fermeture selon la revendication 10, **caractérisé en ce que** le maintien solidaire des parties d'élément (17) se produit dans la région commune (21) à l'aide d'une partie de maintien solidaire (22).

12. Dispositif de fermeture selon la revendication 11, **caractérisé en ce que** la partie de maintien solidaire (22) prend approximativement une forme de U, en vue de côté et dans l'état d'empilement, refermé à la façon d'un éventail, de l'élément de recouvrement (16).

13. Dispositif de fermeture selon la revendication 1, **caractérisé en ce que** le moyen de maintien en position fermée (23) entoure ou maintient solidairement l'empilement (18) en un certain point ou le long de sa direction longitudinale.

14. Dispositif de fermeture selon l'une quelconque des revendications 1 à 13, **caractérisé par** la présence d'un élément de logement (28) logeant et maintenant solidairement l'empilement (18) refermé à la façon d'un éventail dès lors que celui-ci est dans cet état, ledit élément de logement pouvant être maintenu contre une bordure (12, 14, 13) de l'ouverture (11).

15. Dispositif de fermeture selon la revendication 1 ou 14, **caractérisé en ce que** l'élément de logement (28) comporte le dispositif de fermeture longitudinale (29) à l'aide duquel l'élément de logement (28) peut être amené dans un état de fermeture maintenant solidairement l'empilement (18), dès lors que celui-ci est refermé à la façon d'un éventail, ou dans un état d'ouverture libérant l'empilement (18) en vue de produire l'ouverture à la façon d'un éventail.

16. Dispositif de fermeture selon la revendication 14 ou 15, **caractérisé en ce que** l'élément de logement (28) est réalisé sous la forme d'un profilé longitudinal creux.

17. Dispositif de fermeture selon l'une quelconque des revendications 14 à 16, **caractérisé en ce que** l'élément de logement (28), notamment le profilé longitudinal, est flexible.

18. Dispositif de fermeture selon l'une quelconque des revendications 14 à 17, **caractérisé en ce que** l'élément de logement (28), notamment le profilé longitudinal, prend une forme de tuyau flexible.

19. Dispositif de fermeture selon l'une quelconque des revendications 1 à 18, **caractérisé en ce que** l'au moins un dispositif de fermeture longitudinale (29) est disposé sur le côté supérieur de l'élément de logement (28) ou au niveau d'un côté ou des deux côtés de celui-ci.

20. Dispositif de fermeture selon l'une quelconque des revendications 1 à 19, **caractérisé en ce que** l'au moins un dispositif de fermeture longitudinale (29) est un composant fixe, de préférence un composant réalisé d'un seul tenant, de l'élément de logement (28).

21. Dispositif de fermeture selon l'une quelconque des revendications 1 à 20, **caractérisé en ce que** l'au moins un dispositif de fermeture longitudinale (29) dépasse l'extrémité de l'élément de logement (28) associée à la région commune (21) des parties d'élément (17).

22. Dispositif de fermeture selon l'une quelconque des revendications 1 à 21, **caractérisé en ce que** le dispositif de maintien en position abaissée (27) est formé par l'élément de logement (28) ou au moins une partie de celui-ci.

23. Dispositif de fermeture selon l'une quelconque des revendications 1 à 22, **caractérisé en ce que** le dispositif de maintien en position abaissée (27) comporte un élément de maintien en position abaissée (30) disposé au niveau de la partie mobile (31) du dispositif de fermeture longitudinale (29), par exemple au niveau de la glissière d'une fermeture éclair, qu'il peut être déplacé avec celle-ci et comprime l'élément de recouvrement (16) dans sa zone d'action pour former un empilement (18) et/ou le libère pour réaliser l'ouverture à la façon d'un éventail.

24. Dispositif de fermeture selon la revendication 23, **caractérisé en ce que** l'élément de maintien en position abaissée (30) est formé d'un corps glissant (32) ou d'un corps roulant (42), par exemple un rouleau.

25. Dispositif de fermeture selon la revendication 23 ou 24, **caractérisé en ce que** l'élément de maintien en position abaissée (30) s'étend au moins sur la largeur des parties d'élément (17), dépassant de préférence des deux côtés des parties d'élément (17).

26. Dispositif de fermeture selon l'une quelconque des revendications 1 à 25, **caractérisé en ce qu'**une partie de bordure (25) au niveau de laquelle une bordure libre, pouvant être ouverte conjointement à la façon d'un éventail lors de l'ouverture à la façon d'un éventail, de l'élément de recouvrement (16) est prévue.

27. Dispositif de fermeture selon la revendication 26, **caractérisé en ce que** la partie de bordure (25) peut être actionnée manuellement ou de façon motorisée pour permettre l'ouverture à la façon d'un éventail de l'élément de recouvrement (16).

28. Dispositif de fermeture selon la revendication 26 ou 27, **caractérisé en ce que** la partie de bordure (25) peut être fixée à la bordure (13, 12) associée de l'ouverture (11) à l'aide d'au moins un élément de fixation (37), par exemple une fermeture à scratch.

29. Dispositif de fermeture selon la revendication 26 ou 28, **caractérisé en ce que** la partie de bordure (25) est rigide à la flexion vue transversalement au plan d'ouverture à la façon d'un éventail de l'élément de recouvrement (16).

30. Dispositif de fermeture selon l'une quelconque des revendications 26 à 29, **caractérisé en ce que** la partie de bordure (25) est souple à l'intérieur du plan d'ouverture à la façon d'un éventail de l'élément de recouvrement (16), vu dans au moins une direction de flexion.

31. Dispositif de fermeture selon l'une quelconque des revendications 1 à 30, **caractérisé en ce que** l'autre partie de bordure (24) est formée par l'élément de logement (28) ou une partie, par exemple une bande d'élément (35), de celui-ci et peut être fixée à la bordure (12, 14, 13) associée de l'ouverture (11) à l'aide d'un élément de fixation (36), par exemple une fermeture à scratch, notamment une bande de fermeture à scratch.

32. Dispositif de fermeture selon l'une quelconque des revendications 23 à 31, **caractérisé en ce que** l'élément de maintien en position abaissée (30) prenant la forme d'un corps roulant (42), notamment d'un rouleau, est mobile et guidé le long de l'élément de logement (28).

33. Dispositif de fermeture selon la revendication 32, **caractérisé en ce qu'**une bande (50) s'agrippe au niveau du corps roulant (42), notamment du rouleau, ladite bande pouvant s'enrouler et/ou se dérouler sur un rouleau enrouleur (51), par exemple un rouleau à ressort ou un rouleau actionnable par moteur.

34. Dispositif de fermeture selon la revendication 33, **caractérisé en ce que** la bande (50) est réalisée de façon rigide à la flexion, vue dans la direction longitudinale et est guidée de façon à transmettre une force de poussée sur la région située entre le rouleau enrouleur (51) et le corps roulant (42), notamment le rouleau.

35. Dispositif de fermeture selon l'une quelconque des revendications 32 à 34, **caractérisé en ce que** le corps roulant (42), notamment le rouleau, est actionnable par force au moyen d'un dispositif d'entraînement, le long de l'élément de logement (28), au moins dans une direction, lors de la fermeture à la façon d'un éventail de l'élément de recouvrement (16).

36. Dispositif de fermeture selon l'une quelconque des revendications 1 à 35, **caractérisé en ce que** l'élément de recouvrement (16) est formé d'une partie en plastique, notamment d'un film en plastique.

37. Dispositif de fermeture selon la revendication 36, **caractérisé en ce que** les parties d'élément (17) individuelles et les plis (19) sont les composants réalisés d'un seul tenant de la partie en plastique, notamment du film en plastique.

38. Dispositif de fermeture selon l'une quelconque des revendications précédentes ou plusieurs d'entre elles, **caractérisé en ce qu'**un dispositif de couverture (54) est associé au dispositif de fermeture longitudinale (29), ledit dispositif de couverture pouvant être déplacé lors de la fermeture du dispositif de fermeture longitudinale (29) à l'aide de celui-ci à partir d'au moins un côté et pour l'essentiel par en haut sur les régions respectives se refermant à la façon d'un éventail de l'empilement (18), avec un recouvrement au moins partiel progressif dans la direction longitudinale, et étant libéré progressivement de lui lors de l'ouverture en sens contraire du dispositif de fermeture longitudinale (29) lors de la libération correspondante de l'empilement (18).

39. Dispositif de fermeture selon la revendication 38, **caractérisé en ce que** le dispositif de couverture (54) comporte au moins une partie de recouvrement (56).

40. Dispositif de fermeture selon la revendication 38, **caractérisé en ce que** le dispositif de couverture (54) comporte au moins une partie de recouvrement (56) et une partie de fixation (55) associée à la partie de recouvrement (56), la partie de recouvrement (56) étant disposée contre un élément de logement (28) prévu pour l'empilement (18) à l'aide de ladite partie de recouvrement.

41. Dispositif de fermeture selon la revendication 40, **caractérisé en ce que** la partie de fixation (55) est réalisée sous la forme d'une partie de paroi latérale et que la partie de recouvrement (56) est réalisée sous la forme d'une partie supérieure raccordée à elle.

42. Dispositif de fermeture selon l'une quelconque des revendications 38 à 41, **caractérisé en ce que** le dispositif de couverture (54) s'étend sur une partie essentielle de la longueur d'empilement, notamment au moins sur la longueur de l'empilement (18) comprenant les extrémités repliées ensemble des parties d'élément (17).

43. Dispositif de fermeture selon l'une quelconque des revendications 39 à 42, **caractérisé en ce que** la partie de recouvrement (56) du dispositif de couverture (54) est dans certaines limites rigide à la flexion dans la direction longitudinale, au moins dans la région de son arête longitudinale (57) libre.

44. Dispositif de fermeture selon l'une quelconque des revendications 39 à 43, **caractérisé en ce que** la partie de recouvrement (56) comporte sur son côté intérieur (59) et/ou son côté extérieur (60) et/ou son arête longitudinale (57) une surface plane, au moins dans la région de sa bordure longitudinale (58) libre.

45. Dispositif de fermeture selon l'une quelconque des revendications 38 à 44, **caractérisé en ce que** la partie de recouvrement (56) comporte dans la région de sa bordure longitudinale (58) libre une partie supplémentaire s'étendant au moins sur une section de longueur essentielle de la bordure longitudinale (58).

46. Dispositif de fermeture selon la revendication 45, **caractérisé en ce que** la partie supplémentaire s'agrippe dans la région de l'arête longitudinale (57) de la bordure longitudinale (58) libre.

47. Dispositif de fermeture selon la revendication 45 ou 46, **caractérisé en ce que** la partie supplémentaire est réalisée sous la forme d'un film enceignant au moins en partie en l'agrippant l'arête longitudinale (57).

48. Dispositif de fermeture selon l'une quelconque des revendications 45 à 47, **caractérisé en ce que** la partie supplémentaire est réalisée sous la forme d'un élément en bande formant la bordure longitudinale (58) de la partie de recouvrement (56).

49. Dispositif de fermeture selon l'une quelconque des revendications 38 à 48, **caractérisé en ce que** le dispositif de couverture (54) est formé d'au moins une bande superficielle (61) flexible au moins dans certaines limites.

50. Dispositif de fermeture selon l'une quelconque des revendications 38 à 49, **caractérisé en ce que** le dispositif de couverture (54) est disposé à l'intérieur (62) d'un élément de logement (28) prévu pour l'empilement (18) ou fait lui-même partie de l'élément de logement (28).

51. Dispositif de fermeture selon l'une quelconque des revendications 1 à 50, **caractérisé en ce que** le dispositif de fermeture longitudinale (29) comporte une fermeture à bande longitudinale (63), par exemple une fermeture éclair.

52. Dispositif de fermeture selon l'une quelconque des revendications 39 à 41, **caractérisé en ce que** la partie de recouvrement (56) comporte, dans la région de sa bordure longitudinale (58) libre, une épaisseur de section transversale supérieure à l'écartement mesuré entre les interruptions au niveau de la fermeture à bande longitudinale (63), notamment entre les dents de la fermeture éclair.

53. Dispositif de fermeture selon l'une quelconque des revendications 1 à 52, **caractérisé en ce que** l'élément de logement (28) comporte le dispositif de fermeture longitudinale (29).

54. Dispositif de fermeture selon l'une quelconque des revendications 1 à 53, **caractérisé en ce que** l'élément de logement (28) est réalisé sous la forme d'un profilé, par exemple d'un profilé en U, formant une partie de bordure (24).

55. Dispositif de fermeture selon l'une quelconque des revendications 1 à 54, **caractérisé en ce que** le dispositif de fermeture longitudinale (29) comporte des parties latérales (64, 65) de préférence flexibles et s'agrippe à l'aide des parties latérales (64, 65) à l'élément de logement (28), par exemple au profilé, et que les parties latérales (64, 65) sont réalisées d'un seul tenant avec l'élément de logement (28).

56. Dispositif de fermeture selon la revendication 55, **caractérisé en ce que** les parties latérales (64, 65) du dispositif de fermeture longitudinale (29) recouvrent à l'extérieur l'élément de logement (28), par exemple le profilé.

57. Dispositif de fermeture selon l'une quelconque des revendications 1 à 56, **caractérisé en ce que** l'élément de logement (28), notamment le profilé, présente une hauteur de forme égale vue sur toute la longueur de l'empilement (18) ou présente une hauteur plus importante, sur la région d'extrémité (66) associée à la région commune (21) des parties d'élément (17), qu'au niveau de l'extrémité opposée (67).

58. Dispositif de fermeture selon l'une quelconque des revendications 38 à 57, **caractérisé en ce que** lorsque le dispositif de fermeture longitudinale (29) est fermé, sa ligne de fermeture s'étend de façon décentrée avec un écartement transversal plus réduit par rapport à un côté que par rapport à l'autre côté de l'élément de logement (28).

59. Dispositif de fermeture selon l'une quelconque des revendications 38 à 58, **caractérisé en ce que** lorsque le dispositif de fermeture longitudinale (29) est fermé, l'écartement de la ligne de fermeture par rapport au côté de l'élément de logement (28) auquel est associée la partie de recouvrement (56) est inférieur par rapport à celui de l'autre côté de l'élément de logement (28).

60. Dispositif de fermeture selon l'une quelconque des revendications 38 à 59, **caractérisé en ce qu'**au moins les deux extrémités du dispositif de fermeture longitudinale (29), notamment de la fermeture à bande longitudinale (63), sont fixées pour l'essentiel de façon immobile, au moins à l'intérieur du plan de fixation de l'élément de recouvrement (16).

61. Dispositif de fermeture selon l'une quelconque des revendications 38 à 60, **caractérisé en ce que** le dispositif de fermeture longitudinale (29), notamment la fermeture à bande longitudinale (63), peut être déplacé transversalement au plan de fixation de l'élément de recouvrement (16) en partant de l'état fermé dans la direction d'ouverture, au moins sur une région partielle d'une section d'extrémité.

62. Dispositif de fermeture selon l'une quelconque des revendications 38 à 61, **caractérisé en ce que** le dispositif de fermeture longitudinale (29), notamment la fermeture à bande longitudinale (63), présente dans l'orientation étendue une plus grande longueur que l'élément de logement (28).

63. Dispositif de fermeture selon l'une quelconque des revendications 51 à 62, **caractérisé en ce que** le dispositif de fermeture longitudinale (29), notamment la fermeture à bande longitudinale (63), présente une section d'extrémité (68) saillant au-delà de la région commune (21) des parties d'élément (17), ladite section étant fixée à la partie de cadre associée de la bordure d'ouverture (13) ou à l'élément de logement (28) au niveau de la région d'extrémité locale.

64. Dispositif de fermeture selon l'une quelconque des revendications 39 à 63, **caractérisé en ce que** la partie de recouvrement (56) du dispositif de couverture (54) est biseautée vers le haut au niveau de la région d'extrémité (70) associée à la région commune (21) des parties d'élément (17), vu dans la direction de fermeture du dispositif de fermeture longitudinale (29).

65. Dispositif de fermeture selon l'une quelconque des revendications 1 à 64, **caractérisé en ce que** la partie de maintien solidaire (22) est mobile en pivotement dans certaines limites dans le plan de fixation de l'élément de recouvrement (16) et autour d'un axe s'étendant approximativement à angle droit par rapport au plan de fixation.

66. Dispositif de fermeture selon l'une quelconque des revendications 1 à 65, **caractérisé en ce que** la partie de maintien solidaire (22) est immobile par rapport à l'élément de logement (28).

67. Dispositif de fermeture selon l'une quelconque des revendications 1 à 66, **caractérisé en ce que** la partie de maintien solidaire (22) est disposée au niveau de l'élément de logement (28), au moins au niveau de sa base (76).

68. Dispositif de fermeture selon l'une quelconque des revendications 1 à 67, **caractérisé en ce que** la partie (77), disposée à distance supérieure de la base (76) de l'élément de logement (28), de la partie de maintien solidaire (22) présente une longueur supérieure ou égale à la longueur de la partie mobile (31) du dispositif de fermeture longitudinale (29), notamment de la fermeture à bande longitudinale (63) ou correspondant à un multiple de cette longueur.

69. Dispositif de fermeture selon l'une quelconque des revendications 1 à 68, **caractérisé en ce que** la partie de maintien solidaire (22) comprend l'empilement (18) dans la région commune (21) des parties d'élément (17) sur le côté supérieur et/ou sur le côté inférieur et/ou sur le côté arrière et/ou au moins sur un côté de largeur.

70. Dispositif de fermeture selon l'une quelconque des revendications 1 à 69, **caractérisé en ce que** la partie de maintien solidaire (22) est réalisée sous la forme d'un élément rigide en soi.

71. Dispositif de fermeture selon l'une quelconque des revendications 1 à 70, **caractérisé en ce que** les parties d'élément (17) sont serrées ensemble fixement les unes sur les autres dans la région commune (21) à l'aide de la partie de maintien solidaire (22).

72. Dispositif de fermeture selon l'une quelconque des revendications 1 à 71, **caractérisé en ce que** l'élément de recouvrement (16) comporte au niveau de la région de bordure (72) située en avant, lors de l'ouverture à la façon d'un éventail, une manette (73) pouvant être saisie lors de l'ouverture et/ou de la fermeture à la façon d'un éventail.

73. Dispositif de fermeture selon la revendication 72, **caractérisé en ce que** la manette (73) est formée d'une partie d'élément (17) de l'élément de recouvrement (16), par exemple de la dernière partie d'élément (17) de celui-ci.

74. Dispositif de fermeture selon la revendication 72 ou 73, **caractérisé en ce que** la partie d'élément (17) formant la manette (73) est réalisée sous la forme d'une bande rabattable de l'élément de recouvrement (16).

75. Dispositif de fermeture selon l'une quelconque des revendications 72 à 74, **caractérisé en ce que** la partie d'élément (17) suivante dans la direction de fermeture à la façon d'un éventail, sur la manette (73), notamment la bande, comporte sur la région d'extrémité localisée un moyen de fixation (75), par exemple une partie de fermeture à scratch, pour permettre de réaliser une fixation amovible au niveau de la partie de cadre associée de la bordure d'ouverture (13).

76. Dispositif de fermeture selon l'une quelconque des revendications 55 à 75, **caractérisé en ce que** la manette (73), notamment la bande, recouvre totalement ou en partie le moyen de fixation (75) dans la position de libération rabattue en éventail de l'élément de recouvrement (16).

77. Dispositif de fermeture selon la revendication 75 ou 76, **caractérisé en ce que** le moyen de fixation (75) est disposé asymétriquement sur le côté de largeur de la partie d'élément (17) avec une distance davantage réduite par rapport à un pli (19) d'un côté de largeur que par rapport à un pli (19) du côté de largeur opposé de l'élément de recouvrement (16).

78. Dispositif de fermeture selon l'une quelconque des revendications 72 à 77, **caractérisé en ce que** la partie d'élément (17) formant la manette (73), notamment la bande, se termine avec une extrémité (78) située à une certaine distance de la région commune (21) des parties d'élément (17).

79. Dispositif de fermeture selon l'une quelconque des revendications 38 à 78, **caractérisé en ce que** la partie de recouvrement (56) est fixée à la région d'extrémité (70), notamment reliée à l'élément de logement (28), dans la région de son arête d'extrémité (81), au niveau de l'élément de logement (28) ou d'une partie en transmission de force.

80. Dispositif de fermeture selon la revendication 79, **caractérisé en ce que** l'arête d'extrémité (81) fixe de la partie de recouvrement (56) forme avec le plan de fixation de l'élément de recouvrement (16) un angle, notamment approximativement un angle de 90.

81. Dispositif de fermeture selon l'une quelconque des revendications 38 à 78, **caractérisé en ce que** la fermeture à bande longitudinale (63) disposée au niveau de l'élément de logement (28) comporte à l'état fermé une surlongueur au niveau de la région d'extrémité (66) de l'élément de logement (28) ou à proximité de celle-ci.
